# EUROPEAN PATENT APPLICATION

(11) **EP 4 787 274 A1**
(43) Date of publication of application: **05.08.2026**
(21) Application number: 26154481.1
(22) Date of filing: 27.01.2026
(51) Int. Cl.: G06Q 30/0601, G06Q 30/018

(54) **BROKERAGE OF COLLECTIBLES AND RELATED METHODS**

(30) Priority: 03.02.2025 US 202563752943 P; 21.01.2026 US 202619454799
(71) Applicant: Collectors Universe Inc., Santa Ana, CA 92705 (US)
(72) Inventor: Turner V, Nathaniel S., New York (US); Ebeling, Bo, Charleston (US)
(74) Representative: Argyma

(57) **Abstract**

A system (200) and a method (400, 500) including receiving and storing a plurality of collectibles in a vault (230, or at a processing center and receiving one or more purchase parameters from a buyer. The method further including generating an offer (410, 518) to sell one or more collectibles of the plurality of collectibles based upon the one or more purchase parameters (514) from the buyer and sending the generated offer to an owner of the one or more collectibles.

## Description

### CROSS-REFERENCE TO RELATED APPLICATION

This is a regular utility application of U.S. provisional application Ser. No. 63/752,943, filed on February 3, 2025, the entire contents of which are expressly incorporated herein by reference.

### FIELD OF ART

The present disclosure is generally directed to brokering collectibles, such as baseball cards, game cards, tickets, autographs, comic books, video games, and coins, with specific discussions on a system for protecting, storing, and brokering the sale of multiple differing collectibles and related methods thereof.

### BACKGROUND

Collectibles such as sport cards, trading cards, game cards, stamps, tickets, and coins, are examples of physical items collected by hobbyists for both tangible and intangible values. While intangible values may not be as readily measurable, tangible values can be measurable, such as values based on a rarity of a particular trading card and the condition of the card.

Third-party services are available for grading collectibles, including the condition and authenticity of the collectible item. Typically, as an example, when a card is sent to a grade service provider to be graded, the third party service provider inspects the card, ranks the card for condition, typically on a number scale, seals the card in a tamper-evident case or holder, and assigns a serial number to the card along with information about the card for future reference. Once a card has been graded by a reputable third-party grader, the authenticity and condition of the card are backed by the expertise and reputation of the third-party grader, thus removing any subjectivity of self-assessment. Consequently, the value of the card is typically increased thereby.

Purchasing and selling such collectibles at a venue like an auction may be inconvenient and infrequent. While such auctions and transactions may also be performed online, consumer confidence in such online transactions are low without some mutually agreed upon standards and accountability mechanisms in place. Additionally, it can be difficult to ascertain an accurate value of a given collectible in an online sale or auction, due to a lack of authentication by a third-party grader and a limited pool of buyers that may or may not understand the rarity and quality of the collectible. Moreover, the transfer and storage of collectibles, especially the rare and expensive collectibles, can be costly and practically infeasible for an individual hobbyist.

### SUMMARY

Broadly speaking, aspects of the invention are directed to systems and methods for protecting, storing, and brokering collectibles, such as baseball cards, trading cards, coins, comic books, or the like. The system may act as a broker on behalf of a buyer to generate and instantly send offers to multiple differing owners to purchase their respective collectibles, wherein the offer is based at least in part upon an assessed grade and/or value of the specific collectible and a buyer's generalized requests or parameters. Thereby, the buyer may efficiently purchase multiple differing collectibles based on broadly applicable input parameters. Additionally, the buyer may be invoiced and receive the collectibles as part of a bulk order, wherein multiple collectibles are grouped together in a single purchase order and/or shipment, if the buyer wishes to physically receive the collectibles.

Aspects of the invention include a method for brokering collectibles. The method includes receiving and storing a plurality of collectibles in a vault and receiving one or more purchase parameters from a buyer. The method further includes generating an offer to sell one or more collectibles of the plurality of collectibles based upon the one or more purchase parameters from the buyer. The method further includes sending the generated offer to an owner of the one or more collectibles.

Aspects of the invention also include a method for brokering collectibles. The method includes receiving and storing a plurality of collectibles in a vault and receiving one or more purchase parameters from a buyer. The method also includes matching one or more collectibles of the plurality of collectibles to the one or more purchase parameters from the buyer. The method also includes automatically generating an offer to transfer ownership of the one or more matched collectibles.

Aspects of the invention also include a system for brokering collectibles. The system includes a vault containing a plurality of collectibles belonging to respective owners. The system also includes a collectible grading system configured to grade each collectible of the plurality of collectibles by imaging, determining a grade of, and assigning a unique identifier to each collectible. The system also includes a marketplace system configured to receive one or more purchase parameters from a buyer, match one or more collectibles of the plurality of collectibles to the one or more purchase parameters from the buyer, generate an offer to sell the one or more matched collectibles, and send the generated offer to a corresponding owner of the one or more matched collectibles.

The disclosed methods and systems improve security and authenticity of collectible transfers by introducing a tamper-evident encasing process using ultrasonic welding combined with vacuum sealing. This physical sealing prevents unauthorized access and environmental degradation, ensuring collectible integrity. Unlike conventional brokerage systems that rely solely on digital records, this approach provides a hardware-based safeguard against fraud and damage. This improves the ability for the collector and/or seller to maintain collectible quality for long-term storage while having a peace of mind that the transferred collectible or collectibles are safeguarded against fraud.

A still further aspect of the invention includes a method of facilitating transfers of collectibles comprising: receiving and storing a plurality of collectibles in a vault or receiving a plurality of collectibles at a processing center for grading; receiving one or more purchase parameters from a buyer; generating an offer to sell one or more collectibles of the plurality of collectibles based upon the one or more purchase parameters from the buyer; and sending the generated offer to an owner of the one or more collectibles.

The method wherein the generated offer can be sent electronically to the owner's marketplace account.

The method wherein the generated offer can be sent without notifying the owner.

The method can further comprise notifying the owner's owner device of the generated offer.

The method wherein the generated offer can be sent to the owner prior to the owner reviewing grades for the one or more collectibles.

The method wherein the generated offer can be sent to the owner after the owner reviews grades for the one or more collectibles.

The method can further comprise receiving a command to sell from the owner upon approval of the offer by the owner; transferring ownership of the one or more collectibles of the plurality of collectibles from the owner to the buyer; and recording a transfer of ownership of the one or more collectibles of the plurality of collectibles within a collectible database.

The method can further comprise one of: continuing to store the one or more collectibles of the plurality of collectibles in the vault, after recording the transfer of ownership; and shipping the one or more collectibles of the plurality of collectibles from the vault to the buyer, after recording the transfer of ownership.

The method can further comprise shipping the one or more collectibles of the plurality of collectibles from the processing facility to the buyer or to the vault, after recording the transfer of ownership.

The method wherein the one or more purchase parameters comprise a type of collectible, a monetary value range, a percentage of a fair market value, an age of creation range, and/or a grading range.

The method wherein: the buyer is a bulk buyer; the one or more purchase parameters are applicable to multiple differing collectibles of the plurality of collectibles; and the step of generating the offer includes generating multiple differing offers sent to respective owners.

The method wherein the owner and the buyer remain anonymous, at least until after ownership has been transferred.

The method can further comprise matching the one or more purchase parameters from the buyer with characteristics of each collectible of the plurality of collectibles stored in the vault.

The method can further comprise receiving one or more sale parameters from the owner of the one or more collectibles; and generating a tiered list of matched collectibles based upon a number and/or percentage of matching purchase parameters and sale parameters, wherein generating the offer is further based upon the tiered list of matched collectibles.

The method can further comprise grading each collectible of the plurality of collectibles by imaging, determining a grade of, and assigning a unique identifier to each collectible of the plurality of collectibles; and storing the grade of each collectible of the plurality of collectibles in the collectible database.

The method wherein generating the offer is based upon the one or more purchase parameters from the buyers and the stored grade of each collectible of the plurality of collectibles.

The method can further comprise generating a marketplace interface and an offer overlay displayable on an owner device, wherein the offer overlay includes the generated offer.

The method wherein the offer is configured to be automatically generated and sent to the owner, without request by the owner or the buyer.

The method wherein the offer to purchase the one or more collectibles is automatically generated and sent to the owner without the owner's request.

The method can further comprise generating a smart contract, corresponding to the generated offer, on a blockchain network, wherein the smart contract is configured to dictate and automatically verify a transfer of ownership between the owner and the buyer.

The method wherein: receiving one or more purchase parameters from a buyer includes receiving multiple purchase parameters from multiple respective buyers; and generating the offer to sell includes generating multiple offers.

The method can further comprise selecting an optimal offer to subsequently send to the owner, from the generated multiple offers corresponding to the multiple respective buyers, as a function of buyer characteristics and a monetary value range respectively associated with each offer of the generated multiple offers.

A still further aspect of the invention is a method of facilitating transfers of collectibles comprising: receiving and storing a plurality of collectibles in a vault or receiving a plurality of collectibles at a processing center for grading; receiving one or more purchase parameters from a buyer; matching one or more collectibles of the plurality of collectibles to the one or more purchase parameters from the buyer to define one or more matched collectibles; and automatically generating an offer to transfer ownership of the one or more matched collectibles.

The method wherein the offer is one of: a sale offer sendable, such as deliverable, to an owner of the one or more matched collectibles; and a purchase offer sendable, such as deliverable, to a buyer of the one or more matched collectibles.

A still yet further aspect of the invention is a system for facilitating transfers of collectibles comprising: a vault containing a plurality of collectibles belonging to respective owners or a processing center for grading a plurality of collectibles belonging to respective owners; a collectible grading system configured to grade each collectible of the plurality of collectibles by imaging, determining a grade of, and assigning a unique identifier to each collectible; and a marketplace system configured to: receive one or more purchase parameters from a buyer; match one or more collectibles of the plurality of collectibles to the one or more purchase parameters from the buyer; generate an offer to sell the one or more matched collectibles; and send the generated offer to a corresponding owner of the one or more matched collectibles.

The system can further comprise an encasing system configured to encase each collectible of the plurality of collectibles and the unique identifier within a sealed case, forming a sealed collectible unit which is stored in the vault.

The system wherein the marketplace system can further be configured to: receive a sell command from the corresponding owner upon approval of the offer; and transfer and record ownership of the one or more matched collectibles of the plurality of collectibles in a collectible database.

The present system, method, and apparatus improve collectible trading, selling and buying commerce by exposing sellers and buyers to buy and sell collectibles, or to opportunities to pursue collectibles that they currently own and would like to sell or to collectibles that they would like to own without exposing them to unwanted attention, such as to the other transacting party. This allows buyers and sellers to complete collectible transactions that they previously would not have known.

### BRIEF DESCRIPTION OF THE DRAWINGS

These and other features and advantages of the present devices, systems, and methods will become appreciated as the same becomes better understood with reference to the specification, claims and appended drawings wherein:
FIG. 1 illustrates an exemplary collectible unit generally comprised of a collectible encased within a sealed case.
FIG. 2 is a schematic view of a marketplace system for evaluating, safely storing, and brokering collectibles.
FIG. 3 is a schematic view of an exemplary user interface for viewing information related to the collectible.
FIG. 4 is a flowchart of a method for brokering collectibles.
FIG. 5 is a flowchart of a method for brokering collectibles.

### DETAILED DESCRIPTION

The detailed description set forth below in connection with the appended drawings is intended as a description of the presently preferred embodiments of collectible marketplace systems and methods for evaluating, storing, brokering, and selling collectibles, in accordance with aspects of the present devices, systems, and methods, and is not intended to represent the only forms in which the present devices, systems, and methods may be constructed or utilized. The description sets forth the features and the steps for constructing and using the embodiments of the present devices, systems, and methods in connection with the illustrated embodiments. It is to be understood, however, that the same or equivalent functions and structures may be accomplished by different embodiments that are also intended to be encompassed within the spirit and scope of the present disclosure. As denoted elsewhere herein, like element numbers are intended to indicate like or similar elements or features.

Descriptions of technical features or aspects of an exemplary configuration of the disclosure should typically be considered as available and applicable to other similar features or aspects in another exemplary configuration of the disclosure. Accordingly, technical features described herein according to one exemplary configuration of the disclosure may be applicable to other exemplary configurations of the disclosure, and thus duplicative descriptions may be omitted herein.

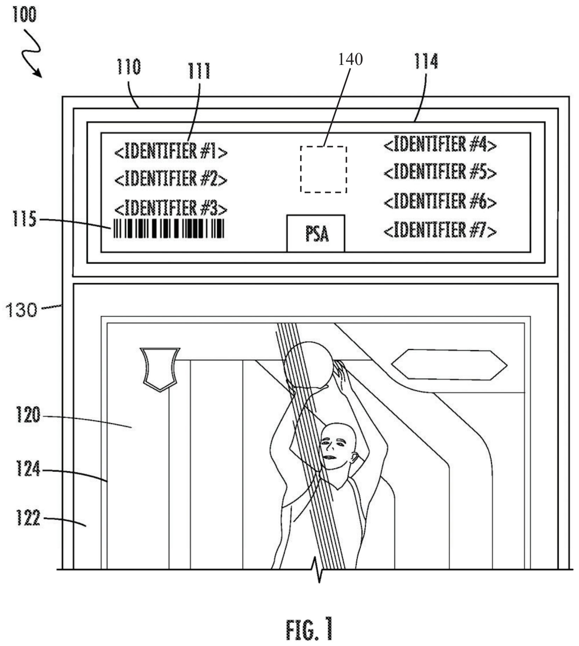

Referring initially to FIG. 1, there is shown an exemplary embodiment of a collectible unit 100 comprising a set of identifiers 110 and a collectible 120 sealed or secured within a case 130. The collectible 120, as shown in FIG. 1, is in the form of a collectible basketball player card or collectible card. However, the collectible 120 may comprise any item that may be certified, such as a coin, a figurine, a limited edition or prized game card, such as a Yu-Gi-Oh!^{®} trading card, a memorabilia item, or an autograph, to name a few non-limiting examples.

The case 130 may be transparent or be configured to have one or more transparent windows 124 that allow a person to view portions or all of the collectible 120, while the collectible 120 is securely housed within the case 130. Although only two windows 124 are shown in FIG. 1, for the identifiers 110 and for the collectible 120, the collectible unit 100 may have a plurality of windows on multiple sides of the case 130, such as a front window to view a front portion of the collectible 120 and a rear window to view a rear portion of the collectible 120. In some examples, a case 130 may have just a single window to show one portion of a collectible, such as a front surface of a media (e.g., a napkin, a photograph) where an autograph has been signed.

In some embodiments, the case 130 may be hermitically sealed. Optionally, the case 130 may have a vacuum seal 122 about a perimeter, which may be configured to help preserve the quality of the collectible 120 that is sealed within the case 130. In another example, the collectible 120 may be placed into a vacuum sealable pouch or sleeve and thereafter positioned within the case 130. In still other examples, the collectible 120 may be placed inside the case without a separate seal or sleeve. The case 130 may be sealed, with the collectible 120 located therein, in any suitable manner, for example by heat-welding, an adhesive, corresponding mating features, etc., to provide a secured unit that is difficult to separate or tamper with without destroying the case 130. In some embodiments, the case 130 may be ultrasonically welded to enclose and permanently seal the collectible 120 within the case 130. By sealing the collectible 120 within a case 130, a certification entity, such as Professional Sports Authenticator (PSA) and Professional Coin Grading Service (PCGS), may ensure that the collectible 120 is not damaged or otherwise compromised after minting or certification, which ensures that the quality of the collectible 120 is maintained so long as the case 130 remains intact. In some examples, the case 130 may have UV protection built into the front and rear sections of the case to protect the collectible from potential harmful UV rays. Exemplary cases are disclosed in U.S. Pat. No. 11,807,435, the contents of which are expressly incorporated herein by reference. In some embodiments, the case 130 may include an optional insert, such as a polyethylene terephthalate (PET) sheet or custom printed sheet, which locates and retains a position of the collectible 120 within the case 130 (not shown).

In some embodiments, the collectible unit 100 comprises one or more identifiers 110. The identifiers 110 may be physically sealed or secured within the case 130. While the set of identifiers 110 have been sealed within a separate compartment of the case 130 from the collectible 120, the set of identifiers 110 may be sealed within a common compartment of the case 130, or may be included in discrete sections of the collectible unit 100, such as a front side and a back side of the unit 100, or a top side and a bottom side of the unit 100.

In an example, the set of identifiers 110 comprises a set of human-readable identifiers 111, shown in FIG. 1 as a set of alphanumeric text viewable through the window 114, and machine-readable identifiers 115, shown in FIG. 1 as a barcode viewable through the window 114. The identifiers 110 may be included in the collectible unit 100 when minting (e.g., forming) the unit 100. The identifiers 110 may include information such as one or more of a name of the collectible 120, a quality of the collectible 120, an assessed grade, a date when the collectible 120 was minted, a series number of the collectible 120, or a serial number uniquely identifying the collectible 120, among other non-limiting examples. Such information may be included in metadata saved on a computer database that is associated with a unique identifier of the collectible 120, such as a serial number or the barcode 115. For example, when a barcode scanner scans the barcode 115, the barcode scanner may query a database to retrieve metadata that is associated with the unique identifier 115 of the collectible 120. While the machine-readable identifier 115 is shown as a barcode, any identifier could be included in the case 130 of the collectible unit 100 that could be recognized by a machine. For example, the identifiers 110 may include a Near Field Communication (NFC) device 140 or a Quick Response (QR) code. In one embodiment, the NFC device 140 may be an NFC chip 140, e.g., an EEPROM chip, which stores any suitable information regarding the collectible 120, and which may also include a security handshake and a link to a webpage that provides information about the collectible. For example, the memory of the NFC chip 140 may save a unique identifier (e.g., a 7-byte UID), a lock byte with anti-tearing protection, a page for One Time Programmable (OTP) memory, a user memory (e.g., 144-bytes large user memory), and dedicated pages for authentication configuration functions (e.g., 8 dedicated pages for a password authentication, a pin configuration, a rolling code configuration, etc.). In one embodiment, the identifier 110 can be in the form of an insert or label that is fitted within the case 130. It should be understood that any information that is human-readable may also be configured to be recognized by a machine for identification and recognition by an electronic device. The identifiers 110 can be produced on security papers and can include holograms and used to identify, track, and catalog the collectible, among others.

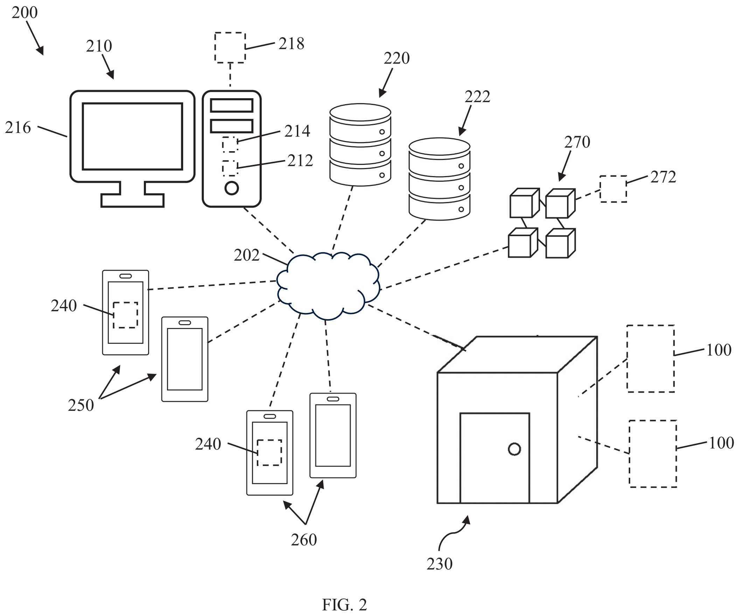

Referring now to FIG. 2, there is shown an exemplary embodiment of a collectible marketplace system 200 for evaluating, storing, brokering, and/or transporting collectibles on behalf of buyers and/or owners (or sellers) of the collectibles 120 (FIG. 1). The collectible marketplace system 200 generally includes a network 202, a system controller 210, one or more databases 220, 222, such as a collectible database 220 and a marketplace database 222, and a vault 230 for storing the collectibles 120 therein. In operation, in one embodiment, the marketplace system 200 may serve as a trusted broker which may receive requests or input parameters from buyers (as discussed further herein), search for collectibles 120 that match such buyers' parameters, generate offers 240, and coordinate communication between the owners and the buyers, via their respective owner devices 250 and buyer devices 260, allowing the buyers to purchase collectibles 120 without directly interfacing with the owners (or sellers) of the collectibles 120. The offers 240 may be sent to, and displayable on, the owner and/or buyer devices 250, 260. In one embodiment, the owner and/or the buyer may opt out from receiving offers 240 by inputting a corresponding command in the marketplace system 200 via their respective device 250, 260.owner and/or buyer devices 250, 260.

In one embodiment, the marketplace system 200 may provide a private and confidential marketplace to efficiently and anonymously transfer collectibles, wherein the identities of the owners (sellers) and the buyers may remain confidential to the transacting parties. Thus, only the collectible marketplace system knows the identifies of the transacting parties, and optionally the system administrators can be given access to the identification of the transacting parties. Therein, in one embodiment, the collectibles 120 may be marketed, sold, and transferred from one party to another party whilst keeping the anonymity of all parties, namely the buyer-seller parties. Additionally, as discussed further herein, the buyer may input various buyer parameters into the marketplace system 200, and the marketplace system 200 may automatically generate offers 240 for a single collectible or a grouping of collectibles 120 so that the buyer may purchase the collectibles 120, individually or in bulk, without directly interfacing with any owner (or seller) in particular. Thereby, the seller and the buyer may remain anonymous relative to one another, and the buyer may purchase multiple collectibles 120 from multiple differing sellers which may be grouped in a single transaction (as perceived by the buyer) because the marketplace system 200 may automatically generate offers 240 to the individual owners, and upon acceptance thereof by the owners, transfer ownership and invoice the buyer for the purchase of the collectibles 120, all while maintaining the confidentiality of the owners and buyers. Thus, the marketplace system 200 may be easy and convenient to use for both sellers and buyers of collectibles. Furthermore, since the collectibles 120 may be securely stored by the marketplace system 200 instead of the individual owners, the marketplace system 200 may serve as a trusted escrow service wherein the collectibles 120 and/or the funds to purchase the collectibles 120 may be held in escrow by the marketplace system 200.

Still further, the marketplace system 200 may provide a private marketplace, wherein the collectibles 120 are not individually marketed to the public at large nor to the buyers themselves because the buyers may only provide their desired and generalized parameters (applicable to multiple differing collectibles 120) and the marketplace system 200 will automatically search, offer (or broker), and transfer ownership of the collectibles 120 (e.g., only the collectibles housed in the vault 230) based on the inputted parameters on behalf of the buyers. In an alternative embodiment, the system 200 may provide a listing of collectibles 120 stored in the vault 230 or otherwise made known or available to the system 200. The list of collectibles 120 can then be made available to registered users of the collectible marketplace system 200 to search through and optionally make blind offers to purchase. However, owners of the list of collectibles 120 will not be made available or provided to any potential buyer or buyers, thereby maintaining anonymity of the owners. In still other examples, a requester can submit a standing offer, such a Michael Jordan rookie card, for which the collectible marketplace system 200 does not have access to or for which there is no information in the system 200. Then, when the system 200 receives a collectible 120 that matches the information submitted by the requester, the system 200 may notify the owner of the collectible 120 that an unsolicited offer has been made for his/her card, as further discussed below.

In one embodiment, the marketplace system 200 may include one or more physical locations, such as centers, warehouses, etc., at which the collectibles 120 are sent by their respective owners for the evaluation, grading, and encasing of the collectible 120. Thereafter, the graded and encased collectibles 120 can be returned to the requesters/owners or, at the owners' requests, sent to the vault 230 for storage thereof. Thereby, in one embodiment, the marketplace system 200 may house and protect the collectibles 120 on behalf of the owners of the collectibles 120. During the purchasing process, the marketplace system 200 may also provide an escrow service that safeguards the collectibles 120 on behalf of current owners and prospective buyers. Additionally, in one embodiment, the marketplace system 200 may verify the purchase funds and/or store funds in an escrow account, ensuring that the buyers have the purchase funds available, which thereby provides an additional layer of security for the sellers of the collectibles 120, as discussed further herein. In some examples, the vault 230 can include environmental controls, such as temperature and humidity sensors and related equipment to maintain optimal conditions, RFID and optical sensors for real-time position tracking, and optionally biometric access control for physical entry. These features provide a secure, monitored environment for collectible storage, reducing risk of theft or environmental damage.

The network 202 can be any suitable communication network or combination of communication networks configured to allow the system controller 210, the databases 220, 222, and the devices 250, 260, to communicate with one another. For example, the communication network 202 can include a Wi-Fi network (which can include one or more wireless routers, one or more switches, etc.), a peer-to-peer network (e.g., a Bluetooth network), a cellular network (e.g., a 4G network, a 4G network etc., complying with any suitable standard, such as CDMA, GSM, LTE, LTE Advanced, WiMAX, etc.), a wired network, such as an ethernet cable, etc. In some embodiments, the communication network 202 can be a local area network, a wide area network, a public network (e.g., the Internet), a private or semi-private network (e.g., a corporate intranet), any other suitable type of network, or any suitable combination of networks. Communications links can be any suitable communications link or combination of communications links, such as wired links, fiber optic links, Wi-Fi links, Bluetooth links, cellular links, etc. The communication network 202 can include any suitable hardware, firmware, and/or software for establishing communication. For example, the communication network 202 can include communication systems that comprise one or more transceivers, one or more communication chips and/or chip sets, etc. In a more particular example, communications systems can include hardware, firmware and/or software that can be used to establish a Wi-Fi connection, a Bluetooth connection, a cellular connection, an Ethernet connection, etc.

The system controller 210 may comprise at least one hardware processor 212, at least one memory 214, and a display screen 216 or other human machine interface (HMI). The system controller 210 may control the various operations of the devices 218 (shown in phantom in FIG. 2) that evaluate, encase, and grade the collectibles 120, such as an NFC device reader, imaging devices, e.g., optical cameras, encasing devices which position and seal the cases, such as robotic end effectors and ultrasonic welders, and various other field devices. Recognizing and processing a machine-readable identifier 110 may be performed by any suitable device in any suitable manner, such as an optical sensor, reader, or scanner of the system controller 210, and/or the vault 230, which is configured to read the machine-readable identifier 110.

The system controller 210 may comprise any suitable computing device or combination of devices, such as a desktop computer, a laptop computer, a smartphone, a tablet computer, a wearable computer, a server, interfaces, databases, agents, engines, modules, a virtual machine being executed by a physical computing device, etc. Each memory 214 (e.g., hard drive, solid state drive, RAM, flash, ROM, etc.) can have stored thereon instructions that when executed by the at least one hardware processor 212 cause the at least one hardware processor 212 to perform several tasks, including access data files, analyze data files, perform analysis of the data files, and provide outputs indicative of characteristics or parameters represented by the data files. The software instructions preferably configure the system controller 210 to execute the functionality as disclosed.

In one embodiment, the system controller 210 may be configured to glean information about the collectible unit or card 100 in one or more ways. For example, the hardware processor 212 of the system controller 210 may identify the machine-readable identifier 115, e.g., a barcode, via an optical sensor, which may then be used to query the collectible database 220 to retrieve information about this specific collectible 120 or a genus or series thereof. Additionally, for example, the hardware processor 212 of the system controller 210 may utilize a scanner to read the NFC device 140, such as by transmitting an electromagnetic inductive current to the NFC device 140 so that the NFC device 140 subsequently transmits data, saved on a memory of the NFC device 140, such as a unique identifier or other information related to the collectible 120.

This NFC-based identification enables secure, contactless verification of collectible authenticity and ownership without exposing sensitive data. The NFC device supports rolling code and password authentication, reducing risk of cloning or replay attacks. The technical benefit is that it provides cryptographically secure, machine-readable identification and enables automated verification without manual inspection. A cryptographic hash is a fixed-length string of characters, also called a digest or fingerprint, which is generated by a one-way mathematical algorithm. It is a unique identifier for a piece of data, and even a tiny change to the original data will result in a completely different hash value.

In one embodiment, the system controller 210 can execute an artificial intelligence (AI) model to inspect and automatically detect various characteristics, parameters, measurements, and other aspects of the collectibles. Furthermore, the AI model may evaluate and determine a monetary values of collectibles 120, based upon sensed conditions or grades of the collectibles 120 and/or fair market values retrieved for similar cards from the collectible database 220 and/or a third party database. Exemplary AI models are of the reactive machine AI type, which uses machine learning algorithm that takes receives an input, such as a request to buy a collectible of certain type and price point, and then the model outputs an answer in response to the input. Many reactive machine AI models use deep learning neural networks to give the model the capability to use intuition and strategic thinking to learn how to better or more accurately respond to the input. Useable deep neural networks include multi-layer perceptions (MLP) and recurrent neural networks (RNN). MLPs are ideal for tasks involving structured data as they can handle input data with fixed dimensions and independent features, allowing them to learn complex patterns and relationships within the structured data. Additionally, their scalability and ease of implementation make them applicable to structured data tasks. For example, the collectible database 220 can have stored data of varying types, such as year, rarity, and incomplete description, for each collectible item. MLP models can be used to match the request entered by user with those collectibles stored in the database. The MLP models can be trained to provide the list of collectibles based on the request even if the information entered by the requester and the information stored in the collectible database 220 are not exact match.

A recurrent neural network (RNN) is another class of artificial neural networks that use sequential data feeding. RNNs have been developed to address the time-series problem of sequential input data. The input of RNN consists of the current input and the previous samples. By analyzing actions, such as requests, and sections made by the requester, an RNN model can generate a list of collectibles in response to the request as well as suggest what the requester may have intended.

In some examples, the collectible marketplace system 200 allows the requester to submit a request based on a picture or an image. For example, the requester may have an image of a collectible card or other collectible 120 but may not know the full spec (e.g., identifying information) of the collectible card. The requester may nonetheless submit the image, and the marketplace system 200 is trained to recognize the collectible card. In an example, a convolutional neural network (CNN, or ConvNet) is used to classify the image that is inquired by the requester. Other deep neural networks for image processing are contemplated, such as LeNet, AlexNet, GoogLeNet/Inception, and ResNet, ZFNet.

The system employs AI models, such as convolutional neural network (CNN) , MLP and others, trained on historical collectible image datasets to determine grades based on high-resolution images captured by optical sensors. This process can be used with professional human graders to ensures consistent, repeatable evaluation. Among other things, it enhances transaction speed and accuracy and reduces computational complexity compared to brute-force matching.

The collectible database 220 (or vault database) is configured to store information related to the collectibles 120 stored within the vault 230. For example, after a collectible 120 has been examined, authenticated, assigned a unique ID, a grade, and encased in a protective housing, information about the collectible 120, such as a card's specification and grade, along with the assigned owner name and unique ID, can be stored in the collectible database 220. The collectible database 220 may be integrated into the system controller 210 and/or be a remote database accessible by the system controller 210. In an example, the collectible database 220 may store relevant information regarding the collectible 120, such as the characteristics, condition, grade, pricing information, e.g., a market value, thereof, image data thereof captured by the system controller 210, ownership information, information related to the vault 230 and a position of the collectibles 120 located inside of the vault 230, and insurance information. The collectible database 220 may also store information regarding past or present identifiers 110 which were generated by an insert forming station.

The marketplace database 222 is configured to store information related to the sale or purchase of the collectibles 120. In one embodiment, the marketplace database 222 may include information related to the buyers, the buyers' requests or purchase parameters, the owners (or sellers), the owners' requests or sale parameters, and/or the monetary value of the collectibles 120. The marketplace database 222 may be integrated as part of the collectible database 220 or be a standalone database accessible by the system controller 210.

The vault 230 may comprise a physical structure for housing or storing the collectibles 120. In one embodiment, the vault 230 may comprise a temperature and humidity controlled storage facility, with security therefor to restrict access to the collectibles 120. The vault 230 may include a computer system that is configured to register and monitor the collectibles 120 within the vault 230. The vault 230 may further include optical sensors or readers, or other sensors, for tracking and monitoring the collectibles 120. In one embodiment, the vault 230 may include a shelf or multiple shelves, or other storage device, with a sensor or reader that electronically reads a collectible unit 100 that is stored on the shelf, and may then electronically register the collectible unit 100 to an electronic storage medium of the vault 230 or the collectible database 220 which is operably connected to the computer system of the vault 230.

The vault 230 is understood to be a secured physical structure or building for securely holding or storing collections of collectibles 120. In some examples, the vault 230 can comprise a plurality of secured physical structures or buildings, which can be located in proximity of one another or be geographically scattered across different cities and/or states. In one embodiment, the vault 230 may be a single facility. In one embodiment, the vault 230 may be multiple differing facilities located at different locations, or in close proximity of one another.

Each owner device 250 and each buyer device 260 may respectively comprise a smartphone, a tablet, a wearable device, a desktop computer, or any computer system suitable to communicate with the system controller 210 via the network 202. In one embodiment, an application installed on the owner device 250 and/or the buyer device 260 may be used to input and/or retrieve information from the system controller 210. Each owner device 250 may belong to a respective individual, a group of individuals, or a legal entity (such as a vendor or corporation) that respectively owns a corresponding collectible 120, in full or in part. In an example, one collectible 120 may be owned by a single owner. In another example, one collectible 120 may be owned by a group of owners, each having a respective owner device 250 in communication with the system controller 210. Similarly, each buyer device 260 may correspond to an individual buyer, a group of buyers, or a legal entity, as non-limiting examples. Thus, the marketplace system 200 may broker the sale and transfer of a collectible 120, between multiple owners of the collectible 120 and a buyer.

In one embodiment, the marketplace system 200 may further include a blockchain or web3 network 270, allowing the system controller 210 to implement a distributed ledger, manager, wallet, smart contract, or like technology to track information related to the collectibles 120, the owners, and/or the buyers. Additionally, in one embodiment, the system controller 210 may generate a non-fungible token (NFT) that corresponds to a given collectible, allowing the NFT to be traded on the blockchain network after the NFT is minted. Therewith, the system controller 210 may assign digital ownership of the NFT to the requesting entity in the blockchain network 270.

In one embodiment, the transfer of ownership may occur and be automatically recorded with the use of smart contracts 272 on the blockchain network 270. For instance, if the owner chooses to sell their collectible 120, the system controller 210 may generate individual smart contracts 272 for each collectible 120 or for a group of collectibles 120 (dictating the terms of sale thereof) and thereafter respectively prompt the owner(s) and the buyer(s) to execute the smart contract(s) 272, by accepting and signing the smart contract(s) 272, which may become effectuated upon proof of transfer of the purchase funds. In one embodiment, the smart contract 272 may be contingent on one or more parameters including a grade parameter, wherein the smart contract 272 cannot be effectuated without the collectible 120 receiving a grade, an escrow parameter which is indicative of whether the collectible 120 is safely secured within the vault 230, an owner identity parameter, and/or a purchase funds parameter that is indicative of whether the purchase funds have been received by the owner. Any desired blockchain network 270 may be utilized by the marketplace system 200. In one embodiment, the marketplace system 200 may connect to and implement a third party blockchain network, such as Ethereum^{®}, Cardano^{®}, Solana^{®}, or Binance Smart Chain^{™}. In one embodiment, the smart contract 272 may be incorporated as part of the generated offer 240, thereby creating a smart offer 240 that automatically effectuates the transfer of the collectible 120 upon acceptance by the owner(s).

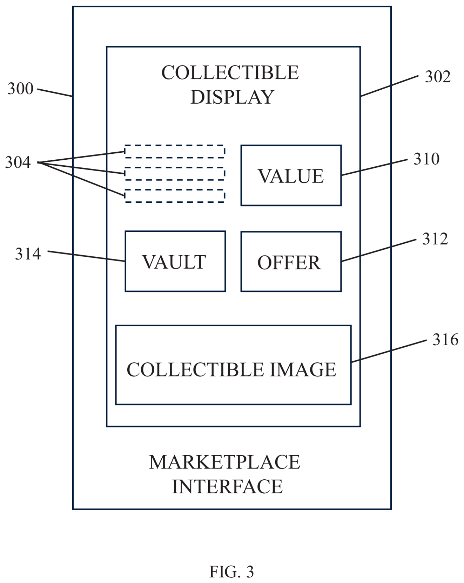

Referring now to FIG. 3, there is shown an embodiment of an exemplary graphical user marketplace interface 300 that is displayable on a user device 250. In one embodiment, the interface 300 can include a collectible display or window 302, including any relevant information thereof as indicated by the phantom blocks 304 in FIG. 3, and one or more overlays overlayed onto the collectible display 302, such as a value overlay 310 for displaying a fair market value of the collectible 120, an offer overlay 312 for displaying the generated offer(s) 240, and a vault overlay 314 for displaying a vault status (i.e., whether the collectible 120 is stored in the vault 230). The collectible display 302 may include information related to the owner's collectible(s) 120, such as a listing of all of the owner's collectibles 120, a specific collectible 120 which was newly graded and minted, the assigned identifiers 110, 111 (e.g., the assessed grade) corresponding to each collectible 120, a corresponding NFT, one or more images of the collectible 120 (and/or collectible unit 100) in a collectible image overlay 316, or any other desired information. The offer overlay 312 may include information pertaining to the generated offer 240, such as a purchase price, a time period for reply, and one or more selectable icons, for example an "accept", "reject", or "counter" icon. The offer overlay 312 may also include a selectable option, e.g., toggle button, for opting out of receiving offers 240. The system controller 210 may generate the interface 300 and cause the interface 300 to be displayed on the user device 250 upon an owner logging into their account (such as their PSA account) or otherwise accessing the server of the marketplace system 200. Thereby, in one embodiment, the owner can easily and efficiently view any generated, unsolicited offers 240 upon accessing their account.

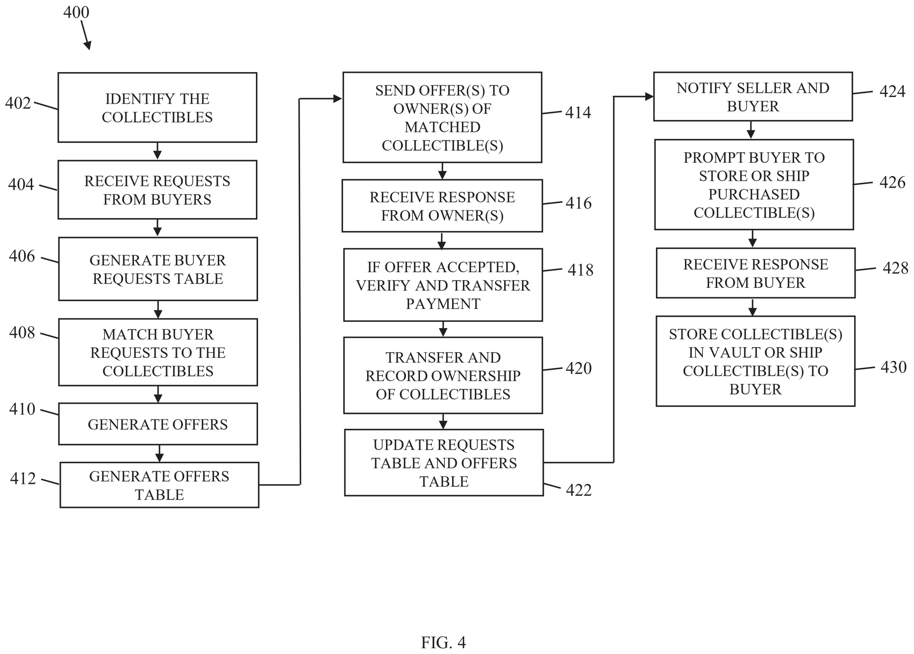

Referring to FIG. 4, there is shown a flowchart of an embodiment of a method or process 400 for operating the marketplace system 200. In one embodiment, the marketplace system 200 may market and broker the sale of collectibles 120, and thereafter manage the transfer of the collectibles 120, individually or in bulk orders between one or more buyers and one or more owners (sellers) of the collectibles 120.

At step 402, the marketplace system 200 may identify one or more collectibles 120. Therein, the marketplace system 200 may determine any relevant characteristics, specifications, or other data related to the collectibles 120, including the rarity, condition, quality, and/or value of the collectibles 120. The marketplace system 200 may or may not physically receive and evaluate the collectibles 120. For example, in one embodiment, the marketplace system 200 may receive and evaluate the collectibles 120 to determine any relevant information pertaining thereto. In such an embodiment, the owners of the collectibles 120 may submit their collectibles 120 to the marketplace system 200, such as a processing facility or center operated by a grading provider such as PSA, for at least one of authenticating, grading, cataloguing, and subsequently storing in a vault 230, which may also have previously graded collectibles 120 stored therein. In some examples, after the one or more collectibles have been processed at the processing facility and sold to one or more buyers, the collectibles can be sent to the one or more buyers without first being sent to the vault. In one embodiment, the marketplace system 200 may access a remote database to retrieve relevant information pertaining to a particular collectible 120, such as a fair market value of the collectible 120. In one embodiment, the marketplace system 200 may only receive and evaluate the collectibles 120 at the processing facility or center, without storage thereof in the vault 230. In one embodiment, the marketplace system 200 may generate offers for owners who have new or preexisting PSA accounts, and whose collectibles may or may not be stored in the vault 230. For example, upon receiving one or more collectibles 120 at the processing facility for authenticating, grading, cataloguing, the one or more processed collectibles are sold to one or more buyers via the present marketplace system 200. In other examples, the one or more processed collectibles are first stored in the vault 230 before ownership of the one or more collectibles is transferred to one or more buyers via the present marketplace system. The processing facility can be one or more buildings, either within close proximity of one another or dispersed in different towns or regions, where collectibles are received from owners for processing.

At step 404, the marketplace system 200 may prompt and receive requests or parameters from one or more buyers. In one embodiment, the buyers may input parameters or requests in a user interface (displayed on the buyer devices 260) of the marketplace system 200. The buyers may select, or manually input, general parameters pertaining to a multitude of collectibles 120 and/or a specific request pertaining to a specific collectible 120. As non-limiting examples, the buyers may select a general type of collectible (such as game cards, baseball cards, coins, etc.), a specific type of collectible (e.g. a signed autograph from a particular person, a Topps Roberto Clemente baseball card, etc.), a grade range, a general price range, a percent or percentage range of a fair market value of a collectible 120 (such as 10% less than the predetermined value of a given collectible 120), a maximum expenditure limit within a given time period, an exact age of minting or creation or a range thereof, and/or a negative limitation (such as no baseball cards). Optionally, the marketplace system 200 may validate the received requests from the buyers, wherein the marketplace system 200 may verify that the requests or parameters are factually accurate. If a buyer has inputted inaccurate parameters or requests, the marketplace system 200 may reprompt the buyer to input new parameters or requests.

At step 406, the marketplace system 200 may generate a buyer requests table or list, which may comprise a record of each buyer and their respective requests or parameters. In another example, the buyer requests table may be hierarchically ranked. For instance, all of the buyers may be ranked and compiled in a list, based on various buyer characteristics and/or the inputted purchase parameters. For example, if the buyers inputted a maximum monetary threshold or bid amount, the marketplace system 200 may rank the buyers by their bid amounts, in a descending order from the highest bid amount to the lowest bid amount. Additionally, for example, the buyer requests table may be ranked by time of input, e.g., a date at which the request or parameter was received by the system controller 210. In such an embodiment, priority may be given to the earliest submitted requests. In one embodiment, the system controller 210 may generate an owner or seller requests table, in addition or alternatively to the buyer requests table.

At step 408, the marketplace system 200 may automatically match the buyers' requests or parameters to the collectibles 120, which may or may not be housed or stored in the vault 230 by the marketplace system 200. In an example, the system controller 210 may query the collectible database 220 to identify which collectibles 120 that are stored in the vault 230 match the buyers' inputted requests or parameters.

In one embodiment, if no collectibles match the inputted parameters, the system controller 210 may notify the buyer accordingly, allowing the buyer to adjust or submit new purchase requests or parameters. In one embodiment, if no collectibles 120 match the inputted parameters, the system controller 210 may automatically adjust the parameters to identify the collectibles 120 that closely (or approximately) match at least one of the parameters or a parameter of high importance (over a parameter of low importance), and thereafter the system controller 210 may notify the buyer of the collectibles 120 that somewhat match the inputted purchase parameters. In another embodiment, if no collectibles 120 match the inputted parameters, the system controller 210 may automatically adjust the inputted parameters by a percent deviance, such as a 10 percent deviance from the originally inputted parameters and/or a unit of grading, and thereafter notify the buyer of the lack of matching collectibles 120 and the automated adjustment of the purchase parameters to yield closely related collectibles 120.

At step 410, the marketplace system 200 may generate one or more offers 240 (that can be sent to one or more owners) to purchase one or more collectibles 120 without the buyer knowing the identity of the one or more sellers. Thereby, the marketplace system 200 may serve as a broker on behalf of the buyer. By way of example only, in one embodiment, an offer 240 may include a listing of one or more collectibles 120 that matched with a buyer's parameters (or multiple buyers), a fixed sale price, a variable sale price expressed as a percentage of a fair market value, and/or an expiration date at which time the offer 240 expires. In one embodiment, the offer 240 may include a single offer 240 for one collectible 120. In one embodiment, the offer 240 may include multiple offers for multiple differing collectibles 120. In one embodiment, the offer 240 may be configured as a bulk offer which may include multiple differing offers from one or more differing buyers to purchase a particular collectible or group of collectibles. For instance, the offer 240 may include a first offer to purchase the collectible 120 as a single unit and a second offer to purchase the collectible 120 as part of a group of collectibles (such as a set), from a single buyer or multiple differing buyers. In one example, wherein the buyer's identity remains anonymous, the purchase offer may not include the buyer's identity or any other personally identifiable information (PII). Similarly, the owner's identity, or any other PII, may be withheld from the buyer so that both parties remain anonymous to each other.

At step 412, the marketplace system 200 may generate an offer table or list. Therein, in one embodiment, the system controller 210 may compile all of the generated offers 240 in a list, which may include information regarding the matched collectibles 120, the identities of the buyers and/or owners, the date each offer 240 was generated, and any other desired information. Additionally, the offer table may identify each offer 240 with a status identifier, such as "unsent", "pending", or "rejected", as non-limiting examples.

At step 414, the marketplace system 200 may send the one or more offers 240 to the respective owners so that the owners may decide whether to sell their matched collectible(s) 120, which may be considered unsolicited one or more offers. In one example, the system controller 210 may prompt the owners to login into their marketplace account and view the available offers 240 displayed in a marketplace interface 300, via the marketplace application or the marketplace server. In another example, the one or more unsolicited offers are uploaded or entered into the one or more owners' marketplace accounts without prompting the one or more owners of the unsolicited offers, which the one or more owners can simply find out upon voluntarily logging into their respective marketplace accounts. In one example, the system controller 210 may send a notification in the form of an audio and/or visual message (e.g., via an SMS message, email, etc.) displayable on the respective owner device 250. The system controller 210 may send an offer 240 by itself or as part of a combined collectible notification (e.g., collectible report) to the owner, which may include a status update of the collectible 120, a grade of the collectible 120, and the offer(s) 240 for the collectible 120. For example, in one embodiment, the marketplace system 200 may encase and grade a collectible 120 (previously sent to the marketplace system 200 by the owner), generate one or more offers 240, and provide a collectible report to the owner. The collectible report may include the assigned grade, a fair market value of the collectible 120 or similar collectibles 120, and any offers 240 based on the buyers' requests or parameters. For example, the system controller 210 may send the collectible report to the owner device 250, which may be in the form of an email or SMS message displayable on the owner device 250. The system controller 210 may also prompt an owner to login into an owner account, via the owner device 250, to view the collectible report in the marketplace interface 300.

The system controller 210 may automatically send the offer(s) 240 to the owner or wait a specified duration of time to send the offer(s) 240 to the owner. In one embodiment, the system controller 210 may generate offers 240 in the form of instant offers 240 that are automatically and respectively sent the owner devices 250 upon generation thereof. Hence, in one embodiment, the system controller 210 may instantly send the offers 240 to the owners (or buyers) upon creation of the offer 240. In other words, the offers 240 may be selected and sent on a first-come, first-served basis.

In one embodiment, the marketplace system 200 may temporarily hold the offer(s) 240 in an offers queue or table (e.g., labeled as unsent offers 240), instead of immediately sending the offer(s) 240 to the owners upon generation thereof. The system controller 210 may generate multiple offers for a given collectible 120 based on the buyers' requests or parameters, queue the offers 240 in an offers table, and thereafter determine which offer(s) 240 (from the offers table) to send to the owner of the collectible 120, based on various parameters, including the date the offer 240 was generated, a preset duration of time (e.g., within a day, week, or month), a purchase price based on the buyers' requests or parameters, and/or whether or not an offer 240 includes a group or bulk purchase. In an example, the system controller 210 may wait a predetermined amount of time to queue multiple offers, and then sort or rank the offers 240 by price, and subsequently send the highest offer 240 (e.g., with the highest purchase or bid) to an owner. The offer 240 may be based on a purchase price for a single collectible 120 and/or a group of collectibles 120. Afterwards, the system controller 210 may keep the unsent offers 240 (e.g., the offers 240 with a lower bid) in the offers table as potential backups or discard the unsent offers 240. Therein, the system controller 210 may reduce the operational costs and increase the efficiency of the brokerage process by queuing the generated offers 240 for a preset time period, and upon expiry of the time period, sending only the highest offer 240 to the owner.

At step 416, the marketplace system 200 may receive a response from the owner in reply to the previously sent offer 240. More particularly, in some embodiments, the owner may choose to accept, reject, or submit a counter offer to the previously sent offer 240. In one embodiment, the owner may only have the option to accept the offer 240, within a given time period (e.g., one day or one week). If the owner does not reply within the preset time period, then the offer 240 may be automatically rejected. Thereby, in one embodiment, a given offer 240 may be instantaneously sent, after matching the collectibles 120 and the buyer purchase parameters, and automatically rejected if the owner does not expressly accept the offer 240 within a given time period. In an example, an owner wishing to accept an offer 240 to sell their collectible(s) 240 may input a sell command via a text or graphical prompt displayed on the owner device 250 (or replay via SMS text or email), and upon receiving the sell command from the owner, the system controller 210 may proceed with the transfer of ownership of the collectible(s) 120, as discussed below.

At step 418, if the owner responds by accepting the offer 240, then the identity of the buyer and/or the owner (or seller) may be verified and the funds between the buyer and the owner may be transferred. In the verification process, the system controller 210 may generate a customer profile for the buyer and/or the owner (or vendor), if said buyer and/or owner was not previously a member of the marketplace system 200, such as PSA. The system controller 210 may also generate a sales order and/or contract (which may be auto-approved upon acceptance of the generated offer 240). The system controller 210 may also generate corresponding invoices which may be sent to the buyer(s). The system controller 210 may instantly send each invoice to a buyer or consolidate multiple invoices into a consolidated invoice that is sent to the buyer after a predetermined amount of time (e.g., at the end of the month).

In one embodiment, the marketplace system 200 may not directly receive any purchase funds and may instead verify that the purchase funds have been transferred from the buyer to the owner, either directly or indirectly via a third party payment processing service, such as Stripe^{®}, Apple Pay^{®}, or PayPal^{®}. In such an embodiment, the system controller 210 may receive a notification from the third party payment processing service (and/or the owners) that the transfer of the purchase funds is completed, allowing the system controller 210 to proceed to the subsequent steps. In one embodiment, the marketplace system 200 may invoice and receive the purchase funds from the buyer in a bulk payment, and thereafter individually transfer the purchase funds to the respective owners of the purchased collectibles 120. In one embodiment, the marketplace system 200 may issue a line of credit to the buyer and may then transfer the purchase funds to the respective owners, before collecting payment from the buyer.

In one embodiment, the marketplace system 200 may conduct or oversee a confidential transfer of funds, wherein the buyers and the owners remain anonymous relative to one another. In an example, the marketplace system 200 may receive and payout the purchase funds from the buyers to the respective owners of the collectibles 120, without disclosing the identities of the buyers and the owners. Thereby, from the perspective of the buyer, the buyer need only pay one lump or bulk sum to the marketplace system 200, without knowledge of the individual owners, e.g., the identities of the owners or how many owners exist. Additionally, from the perspective of the owner, the owner may receive payment from the marketplace system 200 acting as a broker on behalf of the buyer, thereby maintaining the anonymity of the buyer in strict confidentiality. In such an embodiment, the marketplace system 200 may store the funds in escrow or offer a line of credit to the buyer.

At step 420, after the funds have been transferred, or concurrently therewith, the system controller 210 may transfer and record the new ownership of the collectibles 120. For instance, in one embodiment, the system controller 210 may generate a legal contract for review and signature of the parties. Upon signing the contract to transfer the collectible 120, the system controller 210 may record the new ownership data in the collectible database 220 and/or marketplace database 222. In one embodiment, the system controller 210 may generate smart contracts 272 on the blockchain network 270. The smart contracts 272 may automatically transfer ownership to the buyer upon the prior owner receiving the purchase funds. Advantageously, the smart contract 272 may be self-authenticating for automatically and anonymously verifying the identities of the parties and the transfer of the purchase funds. The transfer of ownership, and the details thereof, may be stored by the system controller 210 in the collectible database 220, the marketplace database 222, and/or on the blockchain network 270.

In an example, offers and transaction data are encrypted using AES-256 before transmission. Digital signatures and cryptographic nonces can be applied to prevent replay attacks. Transaction logs can be stored in an encrypted format within the collectible database. This security protocol can protect sensitive buyer and seller information and ensures integrity and confidentiality of transaction records.

At step 422, the system controller 210 may update the requests table and the offers table to reflect the completed transfer of the collectibles 120. At step 424, the system controller 210 may notify the buyer(s) and the seller(s) of a complete transaction, wherein the process of purchasing and transferring the ownership of the collectibles 120 has been completed. For example, the system controller 210 may send a transaction complete notification to the owner devices 250 and the buyer devices 260.

At step 426, the system controller 210 may also prompt and query the buyer, via the buyer device 260, asking whether or not the buyer wishes to continue storing the collectibles 120 in the vault 230 or personally receive the collectibles 120 (via delivery thereof to the buyer's residence or a differing third-party vault). In one embodiment, the system controller 210 may cause the buyer device to display a prompt, allowing the buyer to select whether to store the collectibles 120 in the vault 230 or ship the collectibles 120 to a new location.

At step 428, the system controller 210 may receive the response from the buyer. At step 430, the system controller 210 may either store the purchased collectible(s) 120 in the vault or ship the collectible(s) 120 to the buyer, depending upon the received response from the buyer. If the buyer decides to keep the collectibles 120 in the vault 230, the system controller 210 may or may not rearrange, such as change, the location of the collectible 120 within the vault 230. In an example, after receiving a command to keep the collectibles in the vault 230, the system controller 210 may not move or change the position of the collectibles 120 within the vault 230, and thus may only record the transfer of ownership in the collectible database 220. In another example, the system controller 210 may move or reposition the transferred collectibles 120 to a differing location within the vault 230. In still another example, the system controller 210 may generate one or more new identifiers 110 to include on or within the case 130 of the collectible unit 100.

If the buyer decides to take possession of the collectibles 120, the system controller 210 may arrange shipment of the collectibles 120 to the buyer. Therein, the system controller 210 may withdraw the collectibles 120 from the vault 230, generate the shipping fulfillment order, invoice the buyer, and ship the collectibles 120 to the respective buyers. In an example, the system controller 210 may consolidate shipping orders, wherein the system controller 210 waits for a predetermined time period and checks whether two or more orders (of purchased collectibles 120) can be combined into one shipment. Thereby, the system controller 210 may ship two or more collectibles 120 to the buyer in a single, bulk shipment. Thereafter, the marketplace system 200 may repeat the method 400 for the new owner of the collectible(s) 120.

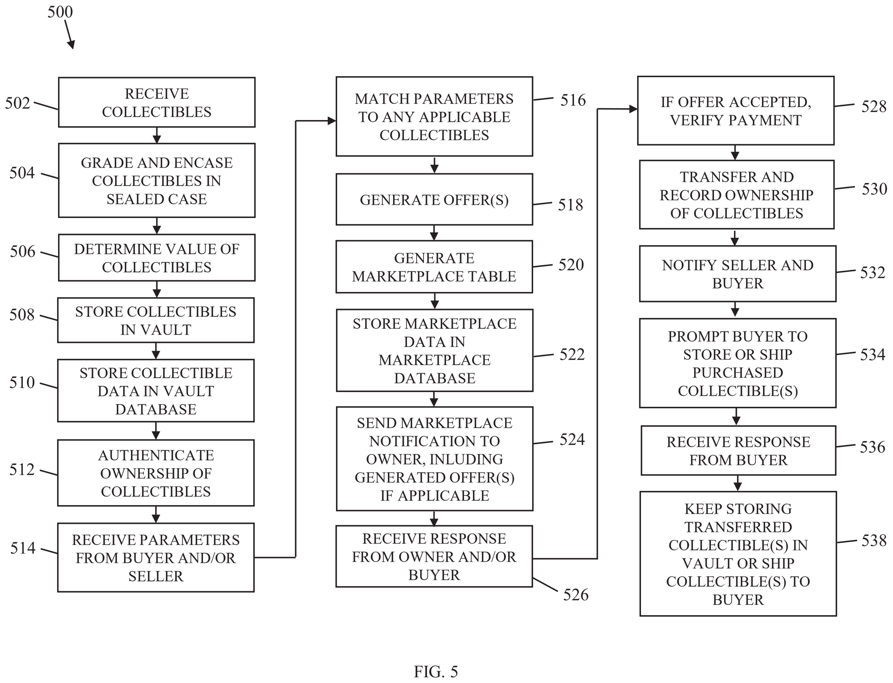

Referring to FIG. 5, there is shown a flowchart of an embodiment of a method or process 500 for operating the marketplace system 200. In one embodiment, the marketplace system 200 may evaluate, store, market and broker the sale of, and/or manage the transfer of the collectibles 120 (i.e., the collectible units 100). At step 502, the marketplace system 200 may receive various collectibles 120 from respective owners. For example, owners of collectible cards 120 may submit their collectible cards 120 to the marketplace system 200, operated by a grading provider such as PSA, for authenticating, grading, cataloguing, and storing in a vault 230, which may have previously graded cards stored therein.

In one embodiment, at step 504, the marketplace system 200 may evaluate each collectible 120 and encase the collectible 120 in a sealed case 130, forming a collectible unit 100 as shown in FIG. 1. Therein, the marketplace system 200 may image, analyze, and assign a grade or score to the collectible 120 that may be usable to determine the rarity, condition, quality, and/or value of the collectible 120. In one embodiment, the collectible unit 100 may include two or more identifiers 110, including at least one human-readable identifier 111 and at least one machine readable identifier 115. Thereby, the marketplace system 200 may track and store information related to the collectibles 120 via their assigned identifiers 110.

At step 506, the marketplace system 200 may determine the value of each collectible 120. For example, in one embodiment, the marketplace system 200 may determine the value of a collectible 120 by retrieving a fair market value of a similar collectible, as indicated in a remote database. In one embodiment, the marketplace system 200 may determine a generalized value of a given type of collectible 120. Additionally, in one embodiment, the marketplace system 200 may determine a specific or unique monetary value of a specific collectible 120 which was assessed by the system controller 210. For instance, the system controller 210 may initially retrieve a fair market value of a general type or category of collectible 120, by accessing and retrieving values of collectibles 120 from one or more remote databases or servers of a third party valuation service. Thereafter, the system controller 210 may adjust this generalized fair market value by a grade factor that accounts for the previously determined grade of the specific collectible 120 in question to arrive at a final, specific monetary value of the collectible 120.

At step 508, after the evaluation and forming each collectible unit 100, the marketplace system 200 may store the collectibles 120 within the vault 230. In other examples, as discussed above, the marketplace system 200 may not physically store the collectibles 120 in the vault 230. At step 510, the marketplace system 200 may generate a collectible or vault database 220 and accordingly store information pertaining to the collectibles 120 within the collectible database 220. In an example, the vault 230 may include a collectible sensor, e.g., an optical sensor, such that the vault 230 identifies and tracks each collectible 120 as the collectible 120 is placed within or removed from the vault 230. Thereby, the collectible database 220 may be an accurate representation of the collectible units 100, and collectibles 120 therein, that are stored within the vault 230 at any given time.

At step 512, the marketplace system 200 may optionally verify and authenticate the identity of the owner and whether or not the owner is indeed the actual legal owner of the collectible 120 in question. For example, the marketplace system 200 may require proof of ID and a copy of a contract or certificate from the owner that certifies that the owner is the legal owner of the collectible 120. Optionally, the marketplace system 200 may also verify and authenticate the identity of the buyers. For example, the marketplace system 200 may require proof of ID for each buyer. Additionally, in one embodiment, the marketplace system 200 may provide a line of credit to the buyer and/or store purchase funds, provided by the buyer, in escrow. Thereby, by authenticating the owner and/or the buyer, the marketplace system 200 ensures trust between all parties.

At step 514, the marketplace system 200 may prompt the owner devices 250 and/or the buyer devices 260 to receive requests or parameters from the owners and/or buyers, respectively. For example, as an initial step, the system controller 210 may send a request prompt to the owner devices 250 and/or the buyer devices 260. The owners and/or the buyers may select and/or manually input parameters which may subsequently be used by the system controller 210 to match certain collectibles 120 and generate offers 240, as discussed in more detail below. In an example, the marketplace system 200 may generate one or more purchase parameters from which the buyer may choose or select a range thereof. In another example, the buyer may manually input a request or a parameter, such as a maximum price for a given collectible 120.

In one embodiment, the purchase parameters may include a specific or generalized type of collectible 120, a monetary value range, a preset maximum monetary limit or monetary threshold of a given collectible 120, a threshold or limit of a total monetary amount (for one or more collectibles 120), a percentage of a fair market value as determined by a third party database and/or the marketplace system 200, an age of creation or range thereof, a grade or grading range, a time duration (e.g., monitoring collectibles 120 for one month), a preset number or amount of automatic purchases (e.g., purchase any number of collectibles 120 with a preset maximum amount for a given time period), and/or a negative limitation such as an exclusion of a specific or generalized type of collectible 120. For instance, in an example, the buyer may input one or more categories of collectibles 120, e.g., baseball cards and basketball cards, a minting range of 2005 or newer, a particular grade as determined by the marketplace system 200, a range of an estimated value of a particular card, a set maximum of total purchases (e.g. a total cost and/or number of collectibles 120), and an exclusion of a particular collectible 120 (which the buyer may already have in their possession). For instance, in another example, the buyer may set a price maximum of no more than 90 percent of a fair market value of a given collectible 120. As can be appreciated, the purchase parameters may include any desired parameters related to the collectibles 120 themselves, financials, durations of time, and any other desired parameter. In one embodiment, the buyer and/or the system controller 210 may rank the purchase parameters, assigning a priority value (or level) thereto, from most to least important request or parameter. Thereby, the system controller 210 may prioritize parameters, at the request of the buyer and/or predetermined factors.

In one embodiment, in addition or as an alternative to the buyer inputted purchase parameters, the owner may input sale parameters. For instance, in an example, the owner may input one or more parameters related to the sale of their collectible 120, e.g., a minimum sale price or percentage of the fair market value of the collectible 120. The owner or the system controller 210 may also rank or prioritize the inputted parameters from most to least desired. Thereby, the owner and/or the buyer may input their desired requests or parameters which the system controller 210 uses as variables to match one or more collectibles 120 to the inputted parameters, as discussed

At step 516, the marketplace system 200 may determine which collectibles 120 match or correspond to the purchase parameters inputted by the buyers and/or the owners. In an example, the system controller 210 may query the collectible database 220 to identify which collectibles 120 in the vault 230 match the purchase parameters of one or more buyers. For instance, if the buyer inputted a price range and a grade range, the system controller 210 may identify which collectibles fall within both of the inputted price and grade ranges. In one embodiment, if no collectibles match the inputted parameters, the system controller 210 may notify the buyer accordingly, allowing the buyer to adjust the purchase parameters or input new purchase parameters if desired. In one embodiment, if no collectibles 120 match the inputted parameters, the system controller 210 may identify the collectibles 120 that somewhat match at least one of the parameters or a parameter of high importance (over a parameter of low importance), and thereafter the system controller 210 may notify the buyer of the corresponding collectibles 120. In one embodiment, if no collectibles 120 match the inputted parameters, the system controller 210 may automatically adjust the inputted parameters by a percent deviance, such as a 10 percent deviance from the originally inputted parameters and/or a unit of grading, and thereafter notify the buyer of the lack of matching collectibles 120 and the automated adjustment of the purchase parameters. In one embodiment, if no collectibles 120 matched the originally inputted parameters, the system controller 210 may optimize for the rarity of the collectibles 120 (as previously determined by the marketplace system 200), above other parameters such as price.

At step 518, the marketplace system 200 may generate one or more offers 240 to sell and/or purchase one or more collectibles 120, serving as a broker on behalf of the owner and/or buyer. In one embodiment, the marketplace system 200 may generate respective offers 240 for the buyers and the owners, thereby acting as a broker for both of the buyers and the owners. The offers 240 can be sent to the owner devices 250 and/or the buyer devices 260, via SMS text, email, a prompt through a marketplace application, or a prompt to login to a corresponding marketplace account, among other non-limiting examples.

In one embodiment, the system controller 210 may act as a broker on behalf of both buyer and seller, and thereby the system controller 210 may generate offers 240 for the buyers and the owners, respectively. In one embodiment, the system controller 210 may broker only on behalf of the buyer, generating sale offers 240 which are subsequently sent to one or more owners. In one embodiment, the system controller 210 may broker only on behalf of the seller and thereby generate one or more purchase offers 240 (i.e., offers 240 for the buyers to purchase the collectible(s) 120).

At step 520, in addition to generating offers 240, the marketplace system 200 may generate a marketplace table or list that may be sent to the buyers and/or owners. In one embodiment, the marketplace table may comprise a listing of all pending offers 240, such as an offer table as discussed above. In such an embodiment, the buyers and/or sellers may view all of the collectibles 120 that presently have offers 240 therefor. In one embodiment, the marketplace table may comprise a tailored listing of the pending offers 240 for a particular owner or a buyer. For example, in one embodiment, the marketplace table may be individually generated and uniquely tailored to each owner.

At step 522, the system controller 210 may store any marketplace data, such as information pertaining to the offers 240, the buyers, and/or the sellers, in the marketplace database 222. For example, in one embodiment, the generated buyer requests table, the offer table, and the marketplace table may be stored and updated as needed in the marketplace database 222.

At step 524, the system controller 210 may send a marketplace notification to each owner and/or buyer. The marketplace notification may include the assigned grade, the determined fair market value, a vault status, any available offers 240, or any other information related to the owner's collectible(s) 120. The marketplace notification may be sent to the owner's device or be displayed as part of the marketplace interface 300, as discussed above. Thereby, each owner can easily and efficiently view the grade, value, and any unsolicited offers in a single and streamlined notification or interface 300. In one embodiment, a marketplace notification, including any offers to purchase a collectible 120, may be sent to a prospective buyer, allowing the buyer an opportunity to decide whether to purchase the matched collectible(s) 120 from one or more owners.

In one embodiment, the offers 240 may be configured as instant offers, wherein the system controller 210 instantly sends the offers 240 to the owners (or buyers) upon creation of the offer 240. The offers 240 may be selected by the system controller 210 and sent to the owner and/or buyer on a first-come, first-served basis. In one embodiment, the system controller 210 may initially queue the generated offers 240 for a predetermined amount of time, and then send the highest or most relevant offer 240 to the owner and/or buyer. In one embodiment, the system controller 210 may send multiple offers 240 to the owner (or buyer) as each offer 240 is generated.

At step 526, the system controller 210 may receive a response from the owner and/or the buyer to accept, reject, or counter the offer 240. At step 528, if the offer 240 is accepted by the owner and/or the buyer, the system controller 210 can invoice the buyer, transfer the payment, and verify whether the payment was completed from the buyer to the owner. In one embodiment, the marketplace system 200 may receive and hold funds in escrow on behalf of the buyer and/or owner. In one embodiment, the marketplace system 200 may only verify whether the funds were transferred, from the buyer to the owner, by a third party payment processing service.

At step 530, the system controller 210 may transfer and record the ownership of the collectible(s) 120. At step 532, the system controller 210 may notify the buyer(s) and the seller(s) of a complete transaction, wherein the process of purchasing and transferring the ownership of the collectible(s) 120 has been completed. For example, the system controller 210 may send a transaction complete notification to the owner devices 250 and the buyer devices 260. At step 534, the system controller 210 may also prompt and query the buyer, via the buyer device 260, asking whether or not the buyer wishes to continue storing the collectibles in the vault 230 or personally receive the collectibles 120 (via delivery thereof to the buyer's residence or a differing third-party vault). In one embodiment, the system controller 210 may cause the buyer device 260 to display a prompt, allowing the buyer to select whether to store the collectibles 120 in the vault 230 or ship the collectibles 120 to a new location. At step 536, the system controller 210 may receive the response from the buyer to either store the collectibles 120 in the vault 230 or ship the collectibles 120 to a differing location. At step 538, responsive to the buyer's response, the marketplace system 200 may store the collectibles 120 in the vault or ship the collectibles 120 to the buyer (or another location as directed by the buyer). The marketplace system 200 may repeat the method 500 for the new owner of the collectibles 120.

In one embodiment, the marketplace system 200 may be configured as an automatic or semi-autonomous marketplace system 200, wherein the system controller 210 automatically buys and sells collectibles 120 on behalf of the buyers and owners (sellers), respectively, and based on parameters or requests inputted by the buyers and/or the owners. In an example, the owner may be prompted to input the owner's monetary threshold price at which the owner would sell their collectible 120 or grouping of collectibles 120. The system controller 210 may store the owner's threshold price in the marketplace database 222. Therewith, the system controller 210 may prompt each buyer to input the buyer's purchase parameters, which may be stored in the marketplace database 222. In an example, if the system controller 210 determines that the buyer's parameters match the owner's collectible(s) and the owner's threshold price, then the system controller 210 may automatically transfer ownership of the collectible(s) 120. Additionally, in one embodiment, the system controller 210 may exchange the purchase funds between the buyer and the seller. Thereafter, the system controller 210 may notify the buyer and the seller of the transferred collectibles 120.

In an alternative embodiment, the marketplace system 200 may not physically receive or store the collectibles 120. Thereby, the steps of evaluating the collectible 120 or storing the collectible 120 in a vault 230 (or other secure physical location) may not be performed by the marketplace system 200. The marketplace system 200 may thereby retrieve data from the owners and/or a third party database to evaluate and determine a monetary value of a given collectible 120. The marketplace system 200 may verify that the various owners do in fact own the collectibles 120. Thereafter, the marketplace system 200 may provide a private and confidential market by generating offers 240 for owners, based at least in part upon the parameters inputted by the buyers and/or owners.

Each memory can have stored thereon instructions that when executed by a hardware processor cause the hardware processor to perform several tasks, including access data files, analyze data files, perform analysis of the data files, and provide outputs indicative of characteristics or parameters represented by the data files. Each hardware processor may comprise any desired processor.

Aspects of the invention cover devices, systems, and methods related to collectible protection and brokering, including methods of use thereof. The method steps disclosed herein can be performed in a differing order as desired. The steps of the methods disclosed herein may be performed by the system controller and/or an individual such as a broker working on behalf of the marketplace system. The disclosed system provides a technical solution to the problem of secure collectible transfer by integrating tamper-evident physical encasing, cryptographically secure NFC identification, automated grading using neural networks, and environmentally controlled vault storage. These improvements collectively enhance security, authenticity, and efficiency in transferring collectibles between buyers and sellers, via solicited and/or unsolicited requests, which an improvement over existing offer-acceptance model and unsecured digital records.

The disclosed system improves security and authenticity of collectible transfers by introducing a tamper-evident encasing process using tamper-proof case. This physical sealing prevents unauthorized access and environmental degradation, ensuring collectible integrity. Unlike conventional brokerage systems that rely solely on digital records, this approach provides a hardware-based safeguard against fraud and damage. The system prevents physical tampering and environmental deterioration as well as maintains collectible quality for long-term storage.

In an example, each collectible is assigned a unique NFC identifier that stores: a 7-byte UID, authentication configuration pages, Anti-tearing protection, and optional One-Time Programmable (OTP) memory for immutable ownership data. This NFC-based identification enables secure, contactless verification of collectible authenticity and ownership without exposing sensitive data. The NFC device supports rolling code and password authentication, reducing risk of cloning or replay attacks. The system provides cryptographically secure, machine-readable identification and enables automated verification without manual inspection, which facilitates transfers of collectibles between buyers and sellers without the parties knowing one another's identifies.

In an example, the system employs machine learning model, such as a convolutional neural network (CNN), trained on historical collectible image datasets to determine grades based on digital images captured by optical sensors. This eliminates subjective human grading and ensures consistent, repeatable evaluation. Optionally, human graders may be used to complement or supplement the machine computerized grading. The system can reduce latency and cost compared to an entirely manual grading system.

In an example, buyer purchase parameters are matched to collectibles using a machine learning model, such as a multi-layer perceptron (MLP) neural network, optimized for structured data. This engine ranks collectibles based on one or more of rarity, grade, and buyer priority, enabling efficient and accurate matching even when input data is incomplete or approximate. The system can enhance transaction speed and accuracy and reduces computational complexity compared to brute-force matching.

When using a vault, the vault can include temperature and humidity sensors to maintain optimal conditions, RFID and optical sensors for real-time position tracking, and biometric access control for physical entry. These features can provide a secure, monitored environment for collectible storage, reducing risk of theft or environmental damage. Thus, aspects of the vault guarantees physical security and environmental stability and enables automated inventory management.

In some examples, when an owner submits a collectible (or more than one collectibles) to a grading entity, such as by sending the collectible to a processing facility or center, to grade the collectible, the grading is performed by the grading entity, the owner is then sent the grade along with an offer to sell the graded collectible to a buyer. In some examples, the owner can submit more than one collectibles to the grading entity for grading and the owner can receive more than one offer to sell the more than one collectibles. The owner and the buyer can agree to a transaction to transfer ownership of the one or more collectibles without knowing one another's identity. The transfer of ownership can occur before the collectible is stent to the vault or after the collectible is sent to the vault. In some examples, the offer is generated by a computer system, which can act as a digital escrow entity. The present system and method provide a mechanism for transferring ownership of collectible goods, for assisting buyers in relocating and acquiring collectible goods, and for assisting sellers in finding buyers for the sellers' collectible goods, preferably without the owner and buyer knowing one another's identity.

Although limited embodiments of marketplace systems, and methods of operation thereof, have been specifically described and illustrated herein, many modifications and variations will be apparent to those skilled in the art. The disclosure is also defined in the following claims.

### Example Embodiments

The following are numbered example embodiments of the apparatuses, devices, systems, and methods related to protecting collectibles within customizable card holders. The below listing of examples or any other examples disclosed herein may be combined in whole or in part. Elements of the examples disclosed herein are not limiting.

Example 1. A method for brokering collectibles. The method including the steps of generating an offer to sell one or more collectibles based upon one or more parameters inputted from a buyer, and sending the generated offer to the buyer.

Example 2. The assembly, system, device, apparatus, and method of any of the above or below Examples alone or in combination, wherein the method further includes receiving and evaluating the collectibles, such as at a processing facility or center.

Example 3. The assembly, system, device, apparatus, and method of any of the above or below Examples alone or in combination, wherein the method further includes encasing the collectibles in respective sealed cases, forming respective collectible units composed of the sealed case and collectible housing therein. Each case includes one or more identifiers configured to provide information related to the collectible housed within the case.

Example 4. The assembly, system, device, apparatus, and method of any of the above or below Examples alone or in combination, wherein the method further includes receiving and storing the collectibles in a vault.

Example 5. A method for brokering collectibles. The method includes receiving and storing a plurality of collectibles in a vault or receiving a plurality of collectibles at a processing facility for processing the collectibles, receiving one or more purchase parameters from a buyer, and generating an offer to sell one or more collectibles of the plurality of collectibles based upon the one or more purchase parameters from the buyer. The method further includes sending the generated offer to an owner of the one or more collectibles.

Example 6. The assembly, system, device, apparatus, and method of any of the above or below Examples alone or in combination, wherein the method further includes receiving a sell command from the owner upon approval of the offer.

Example 7. The assembly, system, device, apparatus, and method of any of the above or below Examples alone or in combination, wherein the method further includes transferring ownership of the one or more collectibles of the plurality of collectibles from the owner to the buyer and recording a transfer of ownership of the one or more collectibles of the plurality of collectibles within a collectible database.

Example 8. The assembly, system, device, apparatus, and method of any of the above or below Examples alone or in combination, wherein the method further includes verifying a transfer of purchase funds from the buyer to the owner.

Example 9. The assembly, system, device, apparatus, and method of any of the above or below Examples alone or in combination, wherein the method further includes transferring purchase funds from the buyer to the owner, whilst maintaining anonymity of the buyer.

Example 10. The assembly, system, device, apparatus, and method of any of the above or below Examples alone or in combination, wherein the method further includes continuing to store the one or more collectibles of the plurality of collectibles in the vault, after recording the transfer of ownership, sending the one or more collectibles to the vault from the processing facility after recording the transfer of ownership, or sending the one or more collectibles to one or more buyers after recording the transfer of ownership.

Example 11. The assembly, system, device, apparatus, and method of any of the above or below Examples alone or in combination, wherein the method further includes shipping the one or more collectibles of the plurality of collectibles from the vault to the buyer, after recording the transfer of ownership.

Example 12. The assembly, system, device, apparatus, and method of any of the above or below Examples alone or in combination, wherein the one or more purchase parameters comprise a type of collectible, a monetary value range, a percentage of a fair market value, an age of creation range, and/or a grading range.

Example 13. The assembly, system, device, apparatus, and method of any of the above or below Examples alone or in combination, wherein the one or more purchase parameters comprise a percentage of a fair market value, wherein the fair market value is determined by a third party valuation service.

Example 14. The assembly, system, device, apparatus, and method of any of the above or below Examples alone or in combination, wherein the buyer is a bulk buyer disposed to purchase multiple differing collectibles respectively owned by multiple differing owners.

Example 15. The assembly, system, device, apparatus, and method of any of the above or below Examples alone or in combination, wherein the buyer is a bulk buyer, the one or more purchase parameters are applicable to multiple differing collectibles of the plurality of collectibles, the step of generating the offer includes generating multiple differing offers sent to respective owners.

Example 16. The assembly, system, device, apparatus, and method of any of the above or below Examples alone or in combination, wherein the buyer is a bulk buyer, and the method further includes generating respective offers for multiple differing collectibles respectively owned by differing owners and thereafter transferring ownership to the buyer upon acceptance of the owners and payment therefor.

Example 17. The assembly, system, device, apparatus, and method of any of the above or below Examples alone or in combination, wherein the owner and the buyer remain anonymous.

Example 18. The assembly, system, device, apparatus, and method of any of the above or below Examples alone or in combination, wherein the owner and the buyer remain anonymous, unless and until the owner accepts the sent offer.

Example 19. The assembly, system, device, apparatus, and method of any of the above or below Examples alone or in combination, wherein the method further includes matching the one or more purchase parameters from the buyer with characteristics of each collectible of a plurality of collectibles stored in the vault or with characteristics of each collectible of a plurality of collectibles located at a processing facility.

Example 20. The assembly, system, device, apparatus, and method of any of the above or below Examples alone or in combination, wherein the characteristics of each collectible include an assessed grade, a fair market value of a general type of collectible, a monetary value of the collectible based on the grade, a condition, a rarity, a date of minting, and/or an individual or grouped purchase price indicating a price of the collectible if sold as an individual unit or if sold as a member of a group of collectibles.

Example 21. The assembly, system, device, apparatus, and method of any of the above or below Examples alone or in combination, wherein the method further includes receiving one or more sale parameters from the owner of the one or more collectibles.

Example 22. The assembly, system, device, apparatus, and method of any of the above or below Examples alone or in combination, wherein the one or more sale parameters include a minimum sale price or percentage of the fair market value of the collectible.

Example 23. The assembly, system, device, apparatus, and method of any of the above or below Examples alone or in combination, wherein the method further includes generating a tiered list of matched collectibles based upon a number and/or percentage of matching purchase parameters and sale parameters, wherein generating the offer is further based upon the tiered list of matched collectibles.

Example 24. The assembly, system, device, apparatus, and method of any of the above or below Examples alone or in combination, wherein the method further includes grading each collectible of the plurality of collectibles by imaging, determining a grade of, and assigning a unique identifier to each collectible of the plurality of collectibles, and storing the grade of each collectible of the plurality of collectibles in the collectible database.

Example 25. The assembly, system, device, apparatus, and method of any of the above or below Examples alone or in combination, wherein the step of grading each collectible occurs before generating the offer, and wherein generating the offer is based upon the one or more purchase parameters from the buyer and the assessed grade assigned to the collectible.

Example 26. The assembly, system, device, apparatus, and method of any of the above or below Examples alone or in combination, wherein the unique identifier includes a machine readable identifier.

Example 27. The assembly, system, device, apparatus, and method of any of the above or below Examples alone or in combination, wherein the unique identifier includes a QR code or an NFC device.

Example 28. The assembly, system, device, apparatus, and method of any of the above or below Examples alone or in combination, wherein the unique identifier includes a human-readable identifier.

Example 29. The assembly, system, device, apparatus, and method of any of the above or below Examples alone or in combination, wherein the method further includes determining a monetary value of each collectible of the plurality of collectibles as a function of the determined grade thereof.

Example 30. The assembly, system, device, apparatus, and method of any of the above or below Examples alone or in combination, wherein generating the offer is based upon the one or more purchase parameters from the buyers and the stored grade of each collectible of the plurality of collectibles.

Example 31. The assembly, system, device, apparatus, and method of any of the above or below Examples alone or in combination, wherein the offer is automatically generated and sent to the owner, without request by the owner or the buyer.

Example 32. The assembly, system, device, apparatus, and method of any of the above or below Examples alone or in combination, wherein the method further includes generating a smart contract, corresponding to the generated offer, on a blockchain network. The smart contract is configured to dictate and automatically verify a transfer of ownership between the owner and the buyer.

Example 33. The assembly, system, device, apparatus, and method of any of the above or below Examples alone or in combination, wherein the method further includes generating a marketplace database comprised of the one or more purchase parameters from the buyer and the generated offer.

Example 34. The assembly, system, device, apparatus, and method of any of the above or below Examples alone or in combination, wherein receiving one or more purchase parameters from a buyer includes receiving multiple purchase parameters from multiple respective buyers, and generating the offer to sell includes generating multiple offers.

Example 35. The assembly, system, device, apparatus, and method of any of the above or below Examples alone or in combination, wherein the method further includes selecting an optimal offer to subsequently send to the owner, from the generated multiple offers corresponding to the multiple respective buyers, as a function of buyer characteristics and a monetary value range respectively associated with each offer of the generated multiple offers.

Example 36. A method for brokering collectibles. The method including receiving and storing a plurality of collectibles in a vault or receiving and processing a plurality of collectibles at a processing facility and receiving one or more purchase parameters from a buyer. The method further including matching one or more collectibles of the plurality of collectibles to the one or more purchase parameters from the buyer. The method further includes automatically generating an offer to transfer ownership of the one or more matched collectibles.

Example 37. The assembly, system, device, apparatus, and method of any of the above or below Examples alone or in combination, wherein the offer is a sale offer sendable to an owner of the one or more matched collectibles.

Example 38. The assembly, system, device, apparatus, and method of any of the above or below Examples alone or in combination, wherein the offer is a purchase offer sendable to a buyer of the one or more matched collectibles.

Example 39. A system for brokering collectibles. The system includes a vault containing a plurality of collectibles belonging to respective owners and a processing facility for receiving and processing a plurality of collectibles, such as for grading and cataloguing. The system further includes a collectible grading system configured to grade each collectible of the plurality of collectibles by imaging, determining a grade of, and assigning a unique identifier to each collectible. The system further includes a marketplace system that is configured to receive one or more purchase parameters from a buyer, match one or more collectibles of the plurality of collectibles to the one or more purchase parameters from the buyer, generate an offer to sell the one or more matched collectibles, and send the generated offer to a corresponding owner of the one or more matched collectibles.

Example 40. The assembly, system, device, apparatus, and method of any of the above or below Examples alone or in combination, wherein the system further includes an encasing system configured to encase each collectible of the plurality of collectibles and the unique identifier within a sealed case, forming a sealed collectible unit which is stored in the vault or sent to one or more buyers.

Example 41. The assembly, system, device, apparatus, and method of any of the above or below Examples alone or in combination, wherein the marketplace system is further configured to receive a sell command from the corresponding owner upon approval of the offer, and transfer and record ownership of the one or more matched collectibles of the plurality of collectibles in a collectible database.

Example 42. A marketplace system for brokering collectibles. The marketplace system includes a hardware processor and a memory including software instructions thereon that when executed cause the hardware processor to match one or more collectibles that are owned by respective owners to one or more purchase parameters from one or more buyers, generate multiple differing offers to sell the one or more matched collectibles, and send the generated offers to corresponding owners of the one or more matched collectibles.

Example 43. The assembly, system, device, apparatus, and method of any of the above or below Examples alone or in combination, wherein the marketplace system further includes a physical vault configured to receive and store the collectibles therein. The physical vault can be one or more secured buildings, either in proximity of one another or dispersed in different towns or regions that have climate controlled and have restricted access. The physical vault can have shelves for storing the collectibles, and can include automated tracking of the collectibles, such as with machine code readers, NFCs, and RFIDs.

Example 44. The assembly, system, device, apparatus, and method of any of the above or below Examples alone or in combination, wherein the marketplace system further includes generating a marketplace interface and one or more overlays displayable on an owner device.

Example 45. The assembly, system, device, apparatus, and method of any of the above or below Examples alone or in combination, wherein the one or more overlays includes an offer overlay displaying an offer corresponding to a matched collectible.

Example 46. The assembly, system, device, apparatus, and method of any of the above or below Examples alone or in combination, further including generating a marketplace interface and an offer overlay displayable on an owner device. The offer overlay includes the generated offer.

Example 47. The assembly, system, device, apparatus, and method of any of the above or below Examples alone or in combination, wherein the generated offer is sent to the owner of the one or more collectibles as an unsolicited offer.

Example 48. The assembly, system, device, apparatus, and method of any of the above or below Examples alone or in combination, wherein the generated offer is sent to the owner of the one or more collectibles manually by an operator of the marketplace system.

Example 49. The assembly, system, device, apparatus, and method of any of the above or below Examples alone or in combination, wherein the unsolicited offer is accepted by selecting a soft button on the marketplace place system.

Example 50. The system, device, apparatus, and method of any of the above or below Examples alone or in combination, wherein ownership of the one or more collectibles is changed to the buyer but the one or more collectibles remain in a vault for at least one day or longer.

Example 51. The system, device, apparatus, and method of any of the above or below Examples alone or in combination, wherein ownership of the one or more collectibles is changed to the buyer but the one or more collectibles remain in a vault for at least one week or longer.

Example 52. The system, device, apparatus, and method of any of the above or below Examples alone or in combination, wherein at least one of the collectibles is a sports card, a game card, a trading card, a ticket, an autograph on a physical medium, a comic book, a video game, or a coin.

Example 53. A computer-implemented method for facilitating secure transfers of collectibles, comprising: obtaining one or more digital images of each collectible in a set of collectibles and assigning a grade from 1 to 10 to the collectible; assigning a unique identifier to each collectible, the identifier comprising a machine-readable identifier and a human-readable identifier displayed in a sealed case to define an encased collectible; receiving purchase parameters from a buyer having a buyer identity via a secure network interface, the parameters including at least one of: collectible type, grade range, monetary value range, and age of creation; matching collectibles to the purchase parameters using a machine learning model trained on historical transaction data; generating and transmitting an offer to an owner having an owner identify via an authenticated channel, wherein the offer includes a cryptographic hash or a non-cryptographic hash of the collectible identifier; and wherein the buyer identity of the buyer and the owner identity of the owner are not known to one another.

Example 54. The system, device, apparatus, and method of any of the above or below Examples alone or in combination, wherein the set of collectibles is stored in a vault, said vault comprising temperature and humidity controls and sensor-based position tracking.

Example 55. The system, device, apparatus, and method of any of the above or below Examples alone or in combination, wherein the generated offer is sent electronically to the owner's marketplace account.

Example 56. The system, device, apparatus, and method of any of the above or below Examples alone or in combination, wherein a matching engine applies a ranking algorithm based on buyer priority and collectible rarity.

Example 57. The system, device, apparatus, and method of any of the above or below Examples alone or in combination, further comprising validating buyer identity using multi-factor authentication prior to transmitting the offer.

Example 58. The system, device, apparatus, and method of any of the above or below Examples alone or in combination, wherein the generated offer is sent without notifying the owner.

Example 59. The system, device, apparatus, and method of any of the above or below Examples alone or in combination, wherein the machine learning model is at least one of a multi-layer perceptron model, recurrent neural networks, a convolutional neural network, LeNet, AlexNet, GoogLeNet/Inception, and ResNet, ZFNet .

Example 60. The system, device, apparatus, and method of any of the above or below Examples alone or in combination, wherein the offer transmitted to the owner includes a digital signature generated using asymmetric cryptography.

Example 61 The system, device, apparatus, and method of any of the above or below Examples alone or in combination, wherein the machine-readable identifier comprises an NFC device storing a 7-byte UID and one-time programmable memory for storing immutable ownership data.

Example 62. The system, device, apparatus, and method of any of the above or below Examples alone or in combination, wherein the generated offer is sent to the owner prior to the owner reviewing grades for one or more collectibles.

Example 63. The system, device, apparatus, and method of any of the above or below Examples alone or in combination, further comprising: receiving a command to sell from the owner upon approval of the offer by the owner; transferring ownership of the one or more collectibles of the plurality of collectibles from the owner to the buyer; and recording a transfer of ownership of the one or more collectibles of the plurality of collectibles within a collectible database.

Example 64. The system, device, apparatus, and method of any of the above or below Examples alone or in combination, further comprising one of: continuing to store the one or more collectibles of the plurality of collectibles in the vault, after recording the transfer of ownership; and shipping the one or more collectibles of the plurality of collectibles from the vault to the buyer, after recording the transfer of ownership. In some examples, the one or more collectibles are shipped to the buyer after being processed at a processing facility without being shipped to the vault. In still other examples, the one or more collectibles are processed, then shipped to a vault, then shipped to a buyer after the transfer of ownership is recorded.

Example 65. The system, device, apparatus, and method of any of the above or below Examples alone or in combination, wherein the machine learning model is a multi-layer perception model.

Example 66. A system for facilitating secure transfers of collectibles, comprising: a vault configured to store a plurality of encased collectibles, each encased collectible comprising a collectible item; a collectible grading subsystem including an imaging device configured to capture digital images of each of the plurality of collectibles, a hardware processor executing a first machine learning model to determine a grade based on the captured digital images, and an identifier assignment module configured to encode a unique identifier into a machine readable identifier; an encasing subsystem configured to ultrasonically weld each collectible and unique identifier within a sealed case; a marketplace subsystem comprising a secure interface for receiving purchase parameters from buyers, a matching engine executing a second machine learning model to match collectibles to purchase parameters; and a communication module configured to transmit offers to owners and buyers via authenticated channels.

Example 67. The system, device, apparatus, and method of any of the above or below Examples alone or in combination, wherein the vault includes optical sensors configured to track the position of each collectible unit and update the collectible database in real time.

Example 68. The system, device, apparatus, and method of any of the above or below Examples alone or in combination, wherein the encasing subsystem includes a robotic arm configured to position collectibles prior to ultrasonic welding.

Example 69. The system, device, apparatus, and method of any of the above or below Examples alone or in combination, wherein the vault includes humidity sensors and temperature sensors configured to maintain predefined environmental thresholds.

Example 70. The system, device, apparatus, and method of any of the above or below Examples alone or in combination, wherein the matching engine uses a recurrent neural network to predict buyer preferences based on historical purchase data.

Example 71. The system, device, apparatus, and method of any of the above or below Examples alone or in combination, wherein the collectible grading subsystem further includes a convolutional neural network optimized for image classification of trading cards.

Example 72. The system, device, apparatus, and method of any of the above or below Examples alone or in combination, wherein the marketplace subsystem further includes a secure API for integration with third-party payment processors.

Example 73. The system, device, apparatus, and method of any of the above or below Examples alone or in combination, wherein the identifier assignment module generates both NFC and QR codes for redundancy.

Example 74. The system, device, apparatus, and method of any of the above or below Examples alone or in combination, wherein the first machine learning model is a convolutional neural network.

Example 75. The system, device, apparatus, and method of any of the above or below Examples alone or in combination, wherein the second machine learning model is a trained neural network.

Example 76. A non-transitory computer-readable storage medium storing instructions that, when executed by one or more processors, cause the one or more processors to: capture images of collectibles and determine grades using a first machine learning model; assign unique identifiers comprising machine-readable codes and human-readable codes; store collectible data and grades in a collectible database; receive purchase parameters from buyers and match collectibles using a second machine learning model; and transmit offers to owners via authenticated channels.

Example 77. The system, device, apparatus, and method of any of the above or below Examples alone or in combination, wherein the first machine learning model is a convolutional neural network.

Example 78. The system, device, apparatus, and method of any of the above or below Examples alone or in combination, wherein the second machine learning model is a trained neural network.

Example 79. The system, device, apparatus, and method of any of the above or below Examples alone or in combination, wherein the instructions further cause the processor to encrypt all offer data using AES-256 before transmission.

Example 80. The system, device, apparatus, and method of any of the above or below Examples alone or in combination, wherein the instructions further cause the processor to generate a graphical user interface displaying offers and vault status overlays.

Example 81. The system, device, apparatus, and method of any of the above or below Examples alone or in combination, wherein the instructions further cause the processor to implement a tiered matching algorithm prioritizing collectibles based on rarity and grade.

Example 82. The system, device, apparatus, and method of any of the above or below Examples alone or in combination, wherein the instructions further cause the processor to store transaction logs in an encrypted format within the collectible database.

Example 83. A computer-implemented method for facilitating secure transfers of collectibles, comprising: imaging each collectible using an optical sensor to determine a grade based on predefined grading parameters; executing a trained neural network model on a hardware processor to assign the grade and store the grade in a collectible database; assigning a unique identifier to each collectible, the identifier comprising: a machine-readable identifier, authentication configuration pages, and anti-tearing protection, and a human-readable identifier displayed on a sealed case; encasing each collectible and the unique identifier within a sealed case using ultrasonic welding to form a tamper-evident collectible unit; storing the collectible units in a secure vault comprising temperature and humidity controls and sensor-based position tracking; receiving purchase parameters from a buyer via a secure network interface, the parameters including at least one of: collectible type, grade range, monetary value range, and age of creation; matching collectibles to the purchase parameters using a multi-layer perceptron model trained on historical transaction data; generating a smart contract on a blockchain network, the smart contract configured to: automatically verify escrow of purchase funds, confirm vault status of the collectible unit, and effectuate transfer of ownership upon satisfaction of predefined conditions; and sending the generated offer to the owner via an authenticated channel, wherein the offer includes a cryptographic hash of the smart contract.

Example 84. A system for facilitating secure transfers of collectibles, comprising: a vault configured to store a plurality of sealed collectible units, each unit comprising a collectible and a unique identifier; a collectible grading subsystem including: an imaging device configured to capture high-resolution images of each collectible, a hardware processor executing a convolutional neural network to determine a grade based on the captured images, and an identifier assignment module configured to encode a unique identifier into an NFC device and generate a corresponding QR code; an encasing subsystem configured to ultrasonically weld each collectible and identifier within a sealed case; a marketplace subsystem comprising: a secure interface for receiving purchase parameters from buyers, a matching engine executing a trained neural network to match collectibles to purchase parameters, a blockchain module configured to generate and deploy smart contracts that automatically verify escrow and vault status before transferring ownership; and a communication module configured to transmit offers to owners and buyers via authenticated channels.

Example 85. A non-transitory computer-readable storage medium storing instructions that, when executed by one or more processors, cause the processors to: capture images of collectibles and determine grades using a convolutional neural network; assign unique identifiers comprising machine-readable codes and human-readable codes; store collectible data and grades in a collectible database; receive purchase parameters from buyers and match collectibles using a multi-layer perceptron model; generate blockchain-based smart contracts configured to verify escrow and vault status; and transmit offers to owners via authenticated channels.

Example 86. The system, device, apparatus, and method of any of the above or below Examples alone or in combination, wherein the identifier is a machine-readable NFC device storing a 7-byte UID.

Example 87. The system, device, apparatus, and method of any of the above or below Examples alone or in combination, wherein the NFC device includes dedicated authentication pages for password and rolling code configuration.

Example 88. The system, device, apparatus, and method of any of the above or below Examples alone or in combination, wherein the smart contract is deployed on an Ethereum-compatible blockchain and includes a cryptographic hash of the collectible's unique identifier.

Example 89. The system, device, apparatus, and method of any of the above or below Examples alone or in combination, wherein the vault includes optical sensors configured to track the position of each collectible unit and update the collectible database in real time.

Example 90. The system, device, apparatus, and method of any of the above or below Examples alone or in combination, wherein the matching engine applies a ranking algorithm based on buyer priority and collectible rarity.

Example 91. The system, device, apparatus, and method of any of the above or below Examples alone or in combination, wherein the instructions further cause the processor to encrypt all offer data using AES-256 before transmission.

Example 92. The system, device, apparatus, and method of any of the above or below Examples alone or in combination, further comprising validating buyer identity using multi-factor authentication prior to generating the smart contract.

Example 93. The system, device, apparatus, and method of any of the above or below Examples alone or in combination, wherein the ultrasonic welding process includes applying a vacuum seal to preserve collectible quality.

Example 94. The system, device, apparatus, and method of any of the above or below Examples alone or in combination, wherein the blockchain module further comprises a wallet manager configured to store cryptographic keys for smart contract execution.

Example 95. The system, device, apparatus, and method of any of the above or below Examples alone or in combination, wherein the neural network for grading comprises a convolutional neural network trained on historical collectible image datasets.

Example 96. The system, device, apparatus, and method of any of the above or below Examples alone or in combination, wherein the NFC device stores metadata including grade, minting date, and ownership history.

Example 97. The system, device, apparatus, and method of any of the above or below Examples alone or in combination, wherein the encasing subsystem includes a robotic arm configured to position collectibles prior to ultrasonic welding.

Example 98. The system, device, apparatus, and method of any of the above or below Examples alone or in combination, wherein the vault includes humidity sensors and temperature sensors configured to maintain predefined environmental thresholds.

Example 99. The system, device, apparatus, and method of any of the above or below Examples alone or in combination, wherein the instructions further cause the processor to generate a graphical user interface displaying offers and vault status overlays.

Example 100. The system, device, apparatus, and method of any of the above or below Examples alone or in combination, wherein the smart contract includes conditional logic to release escrow funds only upon confirmation of vault integrity.

Example 101. The system, device, apparatus, and method of any of the above or below Examples alone or in combination, wherein the matching engine uses a recurrent neural network to predict buyer preferences based on historical purchase data.

Example 97. The system, device, apparatus, and method of any of the above or below Examples alone or in combination, wherein the offer transmitted to the owner includes a digital signature generated using asymmetric cryptography.

Example 102. The system, device, apparatus, and method of any of the above or below Examples alone or in combination, wherein the blockchain module records ownership transfer and escrow verification in a distributed ledger.

Example 103. The system, device, apparatus, and method of any of the above or below Examples alone or in combination, wherein the collectible grading subsystem further includes a convolutional neural network optimized for image classification of trading cards.

Example 104. The system, device, apparatus, and method of any of the above or below Examples alone or in combination, wherein the vault includes RFID readers configured to detect collectible units upon entry and exit.

Example 105. The system, device, apparatus, and method of any of the above or below Examples alone or in combination, wherein the instructions further cause the processor to implement a tiered matching algorithm prioritizing collectibles based on rarity and grade.

Example 106. The system, device, apparatus, and method of any of the above or below Examples alone or in combination, wherein the NFC device includes One-Time Programmable memory for storing immutable ownership data.

Example 107. The system, device, apparatus, and method of any of the above or below Examples alone or in combination, wherein the marketplace subsystem further includes a secure API for integration with third-party payment processors.

Example 108. A computer-implemented method for facilitating secure transfers of collectibles, comprising: imaging each collectible using an optical sensor to digital images; executing a first trained machine learning model on a hardware processor to determine a grade based on the captured images; assigning a unique identifier to each collectible, the identifier comprising: , authentication configuration pages, an anti-tearing protection, and a human-readable identifier displayed on a sealed case; encasing each collectible and the unique identifier within a sealed case to form a tamper-evident collectible unit; storing the collectible units in a secure vault comprising temperature and humidity controls; receiving purchase parameters from a buyer via a secure network interface, the parameters including at least one of: collectible type, grade range, monetary value range, and age of creation; matching collectibles to the purchase parameters using a second machine learning model trained on historical transaction data; and generating and transmitting an offer to an owner via an authenticated channel, wherein the offer is made prior to notifying the owner or the buyer.

Example 109. A system for facilitating secure transfers of collectibles, comprising: a vault configured to store a plurality of sealed collectible units, each unit comprising a collectible and a unique identifier; a collectible grading subsystem including: an imaging device configured to capture digital images of each collectible, a hardware processor executing a machine learning model to determine a grade for each collectible based on the captured images or a collectible database having grades for each of the collectibles, and an identifier assignment module configured to encode a unique identifier into machine readable identifier; an encasing subsystem configured to secure each collectible and identifier within a sealed case; a marketplace subsystem comprising: a secure interface for receiving purchase parameters from buyers, a matching engine executing a trained machine learning model to match collectibles to purchase parameters; and a communication module configured to transmit offers to owners and buyers via authenticated channels.

Example 110. A non-transitory computer-readable storage medium storing instructions that, when executed by one or more processors, cause the processors to: capture images of collectibles and determine grades using a convolutional neural network; assign unique identifiers comprising machine readable codes and human-readable codes; store collectible data and grades in a collectible database; receive purchase parameters from buyers and match collectibles using a multi-layer perceptron model; and transmit offers to owners via authenticated channels.

Example 111. The system, device, apparatus, and method of any of the above or below Examples alone or in combination, wherein the ultrasonic welding process includes applying a vacuum seal to preserve collectible quality.

Example 112. The system, device, apparatus, and method of any of the above or below Examples alone or in combination, wherein the vault includes optical sensors configured to track the position of each collectible unit and update the collectible database in real time.

Example 113. The system, device, apparatus, and method of any of the above or below Examples alone or in combination, wherein the matching engine applies a ranking algorithm based on buyer priority and collectible rarity.

Example 114. The system, device, apparatus, and method of any of the above or below Examples alone or in combination, wherein the instructions further cause the processor to encrypt all offer data using AES-256 before transmission.

Example 115. The system, device, apparatus, and method of any of the above or below Examples alone or in combination, further comprising validating buyer identity using multi-factor authentication prior to transmitting the offer.

Example 116. The system, device, apparatus, and method of any of the above or below Examples alone or in combination, wherein the encasing subsystem includes a robotic arm configured to position collectibles prior to ultrasonic welding.

Example 117. The system, device, apparatus, and method of any of the above or below Examples alone or in combination, wherein the neural network for grading comprises a convolutional neural network trained on historical collectible image datasets.

Example 118. The system, device, apparatus, and method of any of the above or below Examples alone or in combination, wherein the NFC device stores metadata including grade, minting date, and ownership history.

Example 119. The system, device, apparatus, and method of any of the above or below Examples alone or in combination, wherein the vault includes humidity sensors and temperature sensors configured to maintain predefined environmental thresholds.

Example 120. The system, device, apparatus, and method of any of the above or below Examples alone or in combination, wherein the instructions further cause the processor to generate a graphical user interface displaying offers and vault status overlays.

Example 121. The system, device, apparatus, and method of any of the above or below Examples alone or in combination, wherein the offer transmitted to the owner includes a digital signature generated using asymmetric cryptography.

Example 122. The system, device, apparatus, and method of any of the above or below Examples alone or in combination, wherein the matching engine uses a recurrent neural network to predict buyer preferences based on historical purchase data.

Example 123. The system, device, apparatus, and method of any of the above or below Examples alone or in combination, wherein the NFC device includes One-Time Programmable memory for storing immutable ownership data.

Example 124. The system, device, apparatus, and method of any of the above or below Examples alone or in combination, wherein the collectible grading subsystem further includes a convolutional neural network optimized for image classification of trading cards.

Example 125. The system, device, apparatus, and method of any of the above or below Examples alone or in combination, wherein the vault includes RFID readers configured to detect collectible units upon entry and exit.

Example 126. The system, device, apparatus, and method of any of the above or below Examples alone or in combination, wherein the instructions further cause the processor to implement a tiered matching algorithm prioritizing collectibles based on rarity and grade.

Example 127. The system, device, apparatus, and method of any of the above or below Examples alone or in combination, wherein the secure vault includes biometric access control for physical entry.

Example 128. The system, device, apparatus, and method of any of the above or below Examples alone or in combination, wherein the marketplace subsystem further includes a secure API for integration with third-party payment processors.

Example 129. The system, device, apparatus, and method of any of the above or below Examples alone or in combination, wherein the offer includes a timestamp and a cryptographic nonce to prevent replay attacks.

Example 130. The system, device, apparatus, and method of any of the above or below Examples alone or in combination, wherein the identifier assignment module generates both NFC and QR codes for redundancy.

Example 131. The system, device, apparatus, and method of any of the above or below Examples alone or in combination, wherein the instructions further cause the processor to store transaction logs in an encrypted format within the collectible database.

Example 132. A computer-implemented method for facilitating secure transfers of collectibles, comprising: imaging each collectible using an optical sensor to capture high-resolution images; executing a trained convolutional neural network on a hardware processor to determine a grade based on the captured images; assigning a unique identifier to each collectible, the identifier comprising: a machine-readable NFC device storing a 7-byte UID, authentication configuration pages, and anti-tearing protection, and a human-readable identifier displayed on a sealed case; encasing each collectible and the unique identifier within a sealed case using ultrasonic welding to form a tamper-evident collectible unit; storing the collectible units in a secure vault comprising temperature and humidity controls and sensor-based position tracking; receiving purchase parameters from a buyer via a secure network interface, the parameters including at least one of: collectible type, grade range, monetary value range, and age of creation; matching collectibles to the purchase parameters using a multi-layer perceptron model trained on historical transaction data; and generating and transmitting an offer to an owner via an authenticated channel, wherein the offer includes a cryptographic hash of the collectible identifier.

Example 133. A computer-implemented method for facilitating secure transfers of collectibles, comprising: receiving and storing a plurality of collectibles in a vault or receiving a plurality of collectibles at a processing center for grading by at least one of a machine learning model and a human grader; receiving one or more purchase parameters from a buyer, the parameters including at least one of: collectible type, grade range, monetary value range, and age of creation; generating an offer to sell one or more collectibles of the plurality of collectibles based upon the one or more purchase parameters from the buyer; and sending the generated offer to an owner of the one or more collectibles.

Example 134. The system, device, apparatus, and method of any of the above or below Examples alone or in combination, wherein the generated offer is unsolicited by the owner.

Example 135. The system, device, apparatus, and method of any of the above or below Examples alone or in combination, wherein the parameters are received prior to any collectible that matches the parameters is received in the vault or received for grading.

Example 136. The system, device, apparatus, and method of any of the above or below Examples alone or in combination, wherein the computer-implemented method comprises a system controller comprising a processor and at least one memory storing a collectible database and a marketplace database, a network, one or more owner devices, and one or more buyer devices.

Example 137. A computer-implemented method for facilitating secure transfers of collectibles, comprising: imaging each collectible using an optical sensor to capture high-resolution images; executing a trained convolutional neural network on a hardware processor to determine a grade based on the captured images; assigning a unique identifier to each collectible, the identifier comprising a machine-readable NFC device storing a 7-byte UID, authentication configuration pages, and anti-tearing protection, and a human-readable identifier displayed on a sealed case; encasing each collectible and the unique identifier within a sealed case using ultrasonic welding to form a tamper-evident collectible unit; storing the collectible units in a secure vault comprising temperature and humidity controls and sensor-based position tracking; receiving purchase parameters from a buyer via a secure network interface, the parameters including at least one of: collectible type, grade range, monetary value range, and age of creation; matching collectibles to the purchase parameters using a multi-layer perceptron model trained on historical transaction data; and generating and transmitting an offer to an owner via an authenticated channel, wherein the offer includes a cryptographic hash of the collectible identifier.

Example 138. The system, device, apparatus, and method of any of the above or below Examples alone or in combination, wherein the NFC device includes dedicated authentication pages for password and rolling code configuration.

Example 139. The system, device, apparatus, and method of any of the above or below Examples alone or in combination, wherein the ultrasonic welding process includes applying a vacuum seal to preserve collectible quality.

Example 140. The system, device, apparatus, and method of any of the above or below Examples alone or in combination, wherein the matching engine applies a ranking algorithm based on buyer priority and collectible rarity.

Example 141. The system, device, apparatus, and method of any of the above or below Examples alone or in combination, further comprising validating buyer identity using multi-factor authentication prior to transmitting the offer.

Example 142. The system, device, apparatus, and method of any of the above or below Examples alone or in combination, wherein the neural network for grading comprises a convolutional neural network trained on historical collectible image datasets.

Example 143. The system, device, apparatus, and method of any of the above or below Examples alone or in combination, wherein the NFC device stores metadata including grade, minting date, and ownership history.

Example 144. The system, device, apparatus, and method of any of the above or below Examples alone or in combination, wherein the offer transmitted to the owner includes a digital signature generated using asymmetric cryptography.

Example 145. The system, device, apparatus, and method of any of the above or below Examples alone or in combination, wherein the NFC device includes One-Time Programmable memory for storing immutable ownership data.

Example 146. The system, device, apparatus, and method of any of the above or below Examples alone or in combination, wherein the vault includes RFID readers configured to detect collectible units upon entry and exit.

Example 147. The system, device, apparatus, and method of any of the above or below Examples alone or in combination, wherein the secure vault includes biometric access control for physical entry.

Example 148. The system, device, apparatus, and method of any of the above or below Examples alone or in combination, wherein the offer includes a timestamp and a cryptographic nonce to prevent replay attacks.

Example 149. A system for facilitating secure transfers of collectibles, comprising: a vault configured to store a plurality of sealed collectible units, each unit comprising a collectible and a unique identifier; a collectible grading subsystem including an imaging device configured to capture high-resolution images of each collectible, a hardware processor executing a convolutional neural network to determine a grade based on the captured images, and an identifier assignment module configured to encode a unique identifier into an NFC device and generate a corresponding QR code; an encasing subsystem configured to ultrasonically weld each collectible and identifier within a sealed case; a marketplace subsystem comprising a secure interface for receiving purchase parameters from buyers, a matching engine executing a trained neural network to match collectibles to purchase parameters; and a communication module configured to transmit offers to owners and buyers via authenticated channels.

Example 150. The system, device, apparatus, and method of any of the above or below Examples alone or in combination, wherein the vault includes optical sensors configured to track the position of each collectible unit and update the collectible database in real time.

Example 151. The system, device, apparatus, and method of any of the above or below Examples alone or in combination, wherein the encasing subsystem includes a robotic arm configured to position collectibles prior to ultrasonic welding.

Example 152. The system, device, apparatus, and method of any of the above or below Examples alone or in combination, wherein the vault includes humidity sensors and temperature sensors configured to maintain predefined environmental thresholds.

Example 153. The system, device, apparatus, and method of any of the above or below Examples alone or in combination, wherein the matching engine uses a recurrent neural network to predict buyer preferences based on historical purchase data.

Example 154. The system, device, apparatus, and method of any of the above or below Examples alone or in combination, wherein the collectible grading subsystem further includes a convolutional neural network optimized for image classification of trading cards.

Example 155. The system, device, apparatus, and method of any of the above or below Examples alone or in combination, wherein the marketplace subsystem further includes a secure API for integration with third-party payment processors.

Example 156. The system, device, apparatus, and method of any of the above or below Examples alone or in combination, wherein the identifier assignment module generates both NFC and QR codes for redundancy.

Example 157. A non-transitory computer-readable storage medium storing instructions that, when executed by one or more processors, cause the processors to: capture images of collectibles and determine grades using a convolutional neural network; assign unique identifiers comprising NFC device data and human-readable codes; store collectible data and grades in a collectible database; receive purchase parameters from buyers and match collectibles using a multi-layer perceptron model; and transmit offers to owners via authenticated channels.

Example 158. The system, device, apparatus, and method of any of the above or below Examples alone or in combination, wherein the instructions further cause the processor to encrypt all offer data using AES-256 before transmission.

Example 159. The system, device, apparatus, and method of any of the above or below Examples alone or in combination, wherein the instructions further cause the processor to generate a graphical user interface displaying offers and vault status overlays.

Example 160. The system, device, apparatus, and method of any of the above or below Examples alone or in combination, wherein the instructions further cause the processor to implement a tiered matching algorithm prioritizing collectibles based on rarity and grade.

Example 161. The system, device, apparatus, and method of any of the above Examples alone or in combination, wherein the instructions further cause the processor to store transaction logs in an encrypted format within the collectible database.

Example 162. The system, device, apparatus, and method of any of the above or below Examples alone or in combination, wherein an owner submits a collectible to a grading entity to grade the collectible, the grading is performed by the grading entity, the owner is then sent the grade along with an offer to sell the graded collectible to a buyer.

Example 163. The system, device, apparatus, and method of any of the above Examples alone or in combination, wherein the offer to sell is unsolicited or without prior request by the owner.

Example 164. The system, device, apparatus, and method of any of the above or below Examples alone or in combination, wherein the owner and the buyer can agree to a transaction to transfer ownership of the one or more collectibles without knowing one another's identity.

Example 165. The system, device, apparatus, and method of any of the above or below Examples alone or in combination, further comprising shipping the one or more collectibles of the plurality of collectibles from the processing facility to the buyer or to the vault, after recording the transfer of ownership from the seller to the buyer.

Example 165. The system, device, apparatus, and method of any of the above or below Examples alone or in combination, wherein ownership from an owner to a buyer can be transferred for the one or more collectibles when the one or more collectibles are located at a processing facility or when the one or more collectibles are located in a vault.

Example 166. The system, device, apparatus, and method of any of the above Examples alone or in combination, wherein the offer is generated by a computer system, which can act as a digital escrow entity.

## Claims

1. A method (400, 500) of facilitating transfers of collectibles comprising:
receiving and storing a plurality of collectibles in a vault or receiving a plurality of collectibles at a processing center for grading (502);
receiving one or more purchase parameters from a buyer (404, 514);
generating an offer to sell one or more collectibles of the plurality of collectibles based upon the one or more purchase parameters from the buyer (414, 518); and
sending the generated offer to an owner of the one or more collectibles (524).

2. The method (400, 500) of claim 1, wherein the generated offer is sent electronically to the owner's marketplace account.

3. The method (400, 500) of claim 1 or 2, wherein the generated offer is sent without notifying the owner.

4. The method (400, 500) of claim 1 or 2, further comprising notifying the owner's owner device of the generated offer (524).

5. The method (400, 500) of any preceding claim, wherein the generated offer is sent to the owner prior to the owner reviewing grades for the one or more collectibles.

6. The method (400, 500) of any preceding claim, further comprising:
receiving a command to sell from the owner upon approval of the offer by the owner (526);
transferring ownership of the one or more collectibles of the plurality of collectibles from the owner to the buyer (530); and
recording a transfer of ownership of the one or more collectibles of the plurality of collectibles within a collectible database (530).

7. The method (400, 500) of any preceding claim, wherein:
the buyer is a bulk buyer;
the one or more purchase parameters are applicable to multiple differing collectibles of the plurality of collectibles; and
the step of generating the offer includes generating multiple differing offers sent to respective owners.

8. The method (400, 500) of any preceding claim, further comprising:
receiving one or more sale parameters from the owner of the one or more collectibles; and
generating a tiered list of matched collectibles based upon a number and/or percentage of matching purchase parameters and sale parameters,
wherein generating the offer is further based upon the tiered list of matched collectibles.

9. The method (400, 500) of any preceding claim, further comprising:
grading each collectible of the plurality of collectibles by imaging, determining a grade of, and assigning a unique identifier to each collectible of the plurality of collectibles (504); and
storing the grade of each collectible of the plurality of collectibles in the collectible database (510).

10. The method (400, 500) of claim 9, wherein generating the offer is based upon the one or more purchase parameters from the buyers and the stored grade of each collectible of the plurality of collectibles.

11. The method (400, 500) of any preceding claim, further comprising:
generating a marketplace interface (316) and an offer overlay (312) displayable on an owner device, wherein the offer overlay includes the generated offer.

12. The method (400, 500) of any preceding claim, further comprising:
generating a smart contract (272), corresponding to the generated offer, on a blockchain network (270),
wherein the smart contract is configured to dictate and automatically verify a transfer of ownership between the owner and the buyer.

13. A system (200) for facilitating transfers of collectibles comprising:
a vault (230) containing a plurality of collectibles belonging to respective owners or a processing center for grading a plurality of collectibles belonging to respective owners;
a collectible grading system configured to grade each collectible of the plurality of collectibles by imaging, determining a grade of, and assigning a unique identifier to each collectible; and
a marketplace system configured to:
receive one or more purchase parameters from a buyer;
match one or more collectibles of the plurality of collectibles to the one or more purchase parameters from the buyer;
generate an offer to sell the one or more matched collectibles; and
send the generated offer to a corresponding owner of the one or more matched collectibles.

14. The system (200) of claim 13, further comprising:
an encasing system configured to encase each collectible of the plurality of collectibles and the unique identifier (110) within a sealed case (100), forming a sealed collectible unit which is stored in the vault.

15. The system (200) of claim 14, wherein the marketplace system is further configured to:
receive a sell command from the corresponding owner upon approval of the offer; and
transfer and record ownership of the one or more matched collectibles of the plurality of collectibles in a collectible database.
